# FASCICULE DE BREVET EUROPEEN

(11) **EP 0 499 515 B1**
(45) Date de publication et mention de la délivrance du brevet: **09.11.1994**
(21) Numéro de dépôt: 92400323.9
(22) Date de dépôt: 07.02.1992
(51) Int. Cl.: B60T 8/00

(54) **Système de freinage pour véhicule à roues**
Bremssystem für Räderfahrzeuge
Brake system for wheeled vehicle

(30) Priorité: 12.02.1991 FR 9101582
(43) Date de publication de la demande: 19.08.1992
(73) Titulaire: AEROSPATIALE Société Nationale Industrielle, 75781 Paris Cédex 16 (FR)
(72) Inventeur: Chareire, Jean-Louis, F-92300 Levallois Perret (FR)
(74) Mandataire: Bonnetat, Christian

(56) Documents cités:
- EP-A- 0 032 853
- EP-A- 0 172 071
- EP-A- 0 292 687
- FR-A- 2 305 775

## Description

La présente invention concerne un système pour la commande de dispositifs de freinage d'un véhicule piloté par un conducteur et ayant une pluralité de roues pourvues de freins à disque au carbone commandés par un dispositif de freinage, ledit système étant pourvu :
- d'un organe réglable d'actionnement volontaire de freinage, actionnable par le conducteur
- d'un transducteur commandé par ledit organe réglable d'actionnement volontaire de freinage et délivrant un signal représentatif du réglage de cet organe réglable, imposé par le conducteur pour obtenir une décélération voulue dudit véhicule ;
- d'un circuit électrique qui commande lesdits dispositifs de freinage ; et
- d'une liaison reliant ladite sortie du transducteur audit circuit électrique.

Un tel système est par exemple connu du brevet FR-A-2 305 775.

En particulier, bien que de façon non limitative, la présente invention permet d'utiliser des freins à disque au carbone dans des conditions optimales de résistance à l'usure.

Dans un système classique de freinage, même perfectionné par le principe d'antipatinage, l'actionnement de la commande de freinage par le conducteur met en jeu tous les freins de roue simultanément, même si la décélération voulue est faible.

Il est connu que le carbone présente de meilleurs performances contre l'usure que les matériaux de friction classique pour des freinages mettant en jeu de fortes puissances par unité de surface ou de fortes énergies.

Or on a constaté que si un bon régime de lubrification solide n'a pas le temps de s'établir, ce qui est le cas dans un freinage à faible puissance et mettant en jeu une énergie faibles, les performances relatives du carbone diminuent beaucoup.

On a constaté par ailleurs que la température à laquelle se trouve le carbone au moment du freinage influe sur la dégradation des performances à basse puissance ou énergie. Il est souhaitable en effet que la température soit supérieure à environ 100°C au début du freinage.

Enfin, il est connu que l'oxydation du carbone au-dessus de 600 _{°} C dégrade également ses performances.

La présente invention a pour but de pallier ces inconvénients, et concerne un système optimisant l'utilisation de freins multiples, de façon à ce qu'ils fonctionnent le plus souvent possible dans des conditions optimales de température, évitant ainsi toute usure excessive. Ledit système permet aussi d'éviter un échauffement excessif du frein.

A cet effet, selon l'invention, le système pour la commande de dispositifs de freinage d'un véhicule piloté par un conducteur et ayant une pluralité de roues pourvues de freins à disque au carbone commandés par un dispositif de freinage, ledit système étant pourvu :
- d'un organe réglable d'actionnement volontaire de freinage, actionnable par le conducteur
- d'un transducteur commandé par ledit organe réglable d'actionnement volontaire de freinage et délivrant un premier signal représentatif du réglage de cet organe réglable, imposé par le conducteur pour obtenir une décélération voulue dudit véhicule ;
- d'un calculateur qui commande lesdits dispositifs de freinage ; et
- d'une première liaison reliant ladite sortie du transducteur audit calculateur,
   est remarquable en ce que ledit calculateur comporte :
- un premier moyen de calcul relié à ladite première liaison, recevant ledit premier signal et fournissant, en réponse, un deuxième signal représentatif du nombre minimal D de dispositifs de freinage devant être à l'état activé pour obtenir la décélération voulue ; et
- un deuxième moyen de calcul, qui, à partir dudit deuxième signal, établit une première liste d'identités de dispositifs de freinage devant être à l'état activé, ledit calculateur utilisant ladite première liste pour activer lesdits D dispositifs de freinage.

Ainsi, grâce à l'invention, on met en jeu le nombre de freins le plus faible possible, compatible avec l'adhérence des roues, pour assurer les petits freinages qui se révèlent à l'usage de très loin les plus nombreux. Le nombre de freins activés est limité au besoin de décélération indiqué par le conducteur, ce qui, d'une part, fait travailler, et donc user, moins de freins, et, d'autre part, fait travailler dans de meilleures conditions d'usure les freins activés. De plus, on peut faire en sorte que les freins qui sont mis en jeu aient une température initiale supérieure à 100 _{°} C et qu'ils ne dépassent pas la température de 600 _{°} C durant le freinage.

De préférence, ledit système est appliqué à un véhicule muni, à chaque roue, d'un détecteur de patinage des roues sur le sol, et il présente l'intérêt d'avoir ledit calculateur qui comporte :
- un troisième moyen de calcul, relié à chacune des sorties de la pluralité desdits détecteurs de patinage, apte à calculer le nombre de patinages de chaque roue pendant une durée déterminée ; et
- un quatrième moyen de calcul recevant lesdits nombres de patinages, apte à déceler l'existence d'au moins N roues (N entier supérieur ou égal à 1) présentant chacune au moins M patinages (M entier supérieur ou égal à 1), et fournissant un troisième signal significatif d'une telle existence de patinages audit deuxième moyen de calcul, ce deuxième moyen de calcul augmentant alors ledit nombre D de dispositifs de freinage devant être à l'état activé pour le faire passer à un nombre supérieur, ladite augmentation dépendant des valeurs du couple M et N.

L'effet d'intégration du nombre des patinages permet de ne commander l'activation de dispositifs de freinage supplémentaires que si une proportion déterminée des roues freinées présentent un tel problème, éliminant ainsi l'effet, sur le système de freinage, de patinages multiples sur une seule roue, dus à des défauts passagers d'adhérence. De plus, la combinaison d'une intégration du nombre de patinages sur une roue et du nombre de roues qui patinent permet d'optimiser le filtrage éliminant les effets des patinages parasites.

De plus, ledit système selon l'invention est intéressant en ce que ledit quatrième moyen de calcul est apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournit un quatrième signal significatif d'une telle existence de patinages audit deuxième moyen de calcul, ce deuxième moyen de calcul augmentant alors ledit nombre D de dispositifs de freinage devant être à l'état activé pour le faire passer à un nombre D2j supérieur d'au moins deux unités à D, ladite augmentation dépendant des valeurs des couples M1, N1 et M2, N2.

On peut ainsi détecter plusieurs configurations différentes de patinage et mettre en jeu des dispositifs de freinage supplémentaires.

De même, ledit système présente la caractéristique de comporter un moyen d'affichage de données, comportant une entrée de commande réglable, actionnable par le conducteur pour y entrer des données relatives à la valeur estimée du coefficient de frottement des roues sur le sol, et qui transforme lesdites données en un cinquième signal, représentatif de ladite valeur estimée du coefficient de frottement, ledit cinquième signal étant transmis par une deuxième liaison audit deuxième moyen de calcul qui modifie, en fonction dudit cinquième signal, le nombre d'identités de dispositifs de freinage de ladite première liste.

Le nombre de dispositifs de freinage activés initialement peut ainsi être optimisé en fonction du coefficient de frottement prévu entre les roues et le sol, ce qui permet d'activer le nombre minimal de dispositifs de freinage et évite aussi des patinages répétés en début de freinage.

Par ailleurs, ledit système est remarquable en ce que ledit calculateur comporte une table fournissant audit deuxième moyen de calcul une deuxième liste ordonnée des identités desdits dispositifs de freinage, ledit deuxième moyen de calcul choisissant les identités des dispositifs de freinage constituant ladite première liste à partir d'un endroit prédéterminé de ladite deuxième liste et en la parcourant toujours dans le même sens.

De ce fait, les freins chauds sont utilisés le plus souvent et donc dans de bonnes conditions.

De plus, ledit système, comportant une pluralité de capteurs de température, chacun associé à un frein, est remarquable en ce que le calculateur comporte un cinquième moyen de calcul recevant les signaux issus desdits capteurs de température, et apte à établir une troisième liste des identités des dispositifs de freinage dont le frein est à une température dont la valeur est comprise entre une valeur de température minimale et une valeur de température maximale pré-établies, et transmettant ladite troisième liste audit deuxième moyen de calcul, ce dernier choisissant prioritairement dans cette troisième liste les identités des dispositifs de freinage constituant ladite première liste.

De cette manière, les freins qui sont dans la plage optimale de température de fonctionnement sont utilisés le plus souvent.

De même, ledit système, comportant une pluralité de capteurs de température, chacun associé à un frein, présente l'intérêt d'avoir son calculateur qui comporte un sixième moyen de calcul, recevant les informations issues desdits capteurs de température, et apte à établir une quatrième liste ordonnée des identités des dispositifs de freinage dont le frein est à une température dont la valeur est comprise entre la valeur de la température minimale et la valeur de la température maximale pré-établies, ladite quatrième liste étant ordonnée en fonction de l'écart de température entre la température de chaque frein considéré et ladite température minimale, ledit sixième moyen de calcul étant relié audit deuxième moyen de calcul et lui fournissant ladite quatrième liste, ledit deuxième moyen de calcul choisissant prioritairement dans cette quatrième liste les identités des dispositifs de freinage constituant ladite première liste.

Ce choix permet de réchauffer les freins à température proche de la température minimale, ce qui les maintient au-dessus de celle-ci, et par ailleurs évite de chauffer trop souvent les freins à température proche de la température maximale.

Par ailleurs, ledit système, comportant une pluralité de capteurs de température, chacun associé à un frein, est remarquable en ce que le calculateur comporte un septième moyen de calcul, recevant les informations issues desdits capteurs de température, et apte à établir une cinquième liste des identités des dispositifs de freinage dont le frein est à une température dépassant une température maximale de sécurité pré-établie, et transmettant ladite cinquième liste audit deuxième moyen de calcul, lequel est apte à éliminer, de ladite première liste des identités des dispositifs de freinage devant être à l'état activé, lesdites identités des dispositifs de freinage de ladite cinquième liste, et apte à ajouter, à ladite première liste, un nombre d'identités de dispositifs de freinage égal au nombre d'identités de dispositifs de freinage venant d'être éliminées de ladite première liste.

Ainsi, une détérioration due à une température excessive est évitée.

De plus, ledit système, comportant une pluralité de capteurs de température, chacun associé à un frein, présente l'intérêt d'avoir son calculateur qui comporte un huitième moyen de calcul, recevant les informations issues desdits capteurs de température, apte à détecter que chacun des freins est à une température inférieure à une température de repos, déterminant l'état repos lors d'un cycle thermique des freins, et transmettant un sixième signal, significatif d'une telle détection, audit deuxième moyen de calcul, lequel, après réception d'un tel sixième signal, modifie ledit ordre d'établissement des identités des dispositifs de freinage de ladite première liste.

Ainsi, on évite que certains freins ne s'usent plus que d'autres.

De même, ledit système, comportant une pluralité de capteurs de température, chacun associé à un frein, est remarquable en ce que ledit deuxième moyen de calcul est apte, après réception dudit sixième signal, à modifier ledit ordre d'établissement des identités des dispositifs de freinage de ladite première liste, de façon telle que chacun desdits dispositifs de freinage soit utilisé le premier environ autant de fois que les autres l'ont été, en se rapportant à un grand nombre de cycles thermiques.

De cette façon, l'usure est statistiquement répartie de façon-égale sur tous les freins.

Par ailleurs, ledit système présente l'intérêt de comporter un second moyen d'affichage comprenant un afficheur et recevant dudit deuxième moyen de calcul, au moyen d'une troisième liaison, le nombre de dispositifs de freinage devant être à l'état activé en l'absence de patinage, fonction desdits premier et cinquième signaux, ainsi que le nombre de dispositifs de freinage effectivement à l'état activé.

Le conducteur peut ainsi doser son freinage et peut, par ailleurs, corriger, pour les freinages ultérieurs, les données qu'il fournit au calculateur, relatives au coefficient de frottement estimé, ce qui permet de mieux estimer le nombre de dispositifs de freinage à activer en fonction du coefficient de frottement des roues sur le sol.

De plus, ledit système, appliqué à un aéronef ayant un train d'atterrissage comportant plusieurs couples de roues appariées, chacune disposée symétriquement vis-à-vis de l'autre du couple par rapport au plan de symétrie de l'aéronef, est remarquable en ce que ledit deuxième moyen de calcul maintient dans un état identique, activé ou désactivé, les deux dispositifs de freinage des roues appariées d'un couple.

Ainsi, le freinage ne risque pas de faire dévier l'aéronef de sa trajectoire.

Par ailleurs, ledit système, contrôlant les freins d'un premier véhicule auquel est attelé au moins un deuxième véhicule ayant une pluralité de roues pourvues de freins à disque au carbone commandés par un dispositif de freinage, est remarquable en ce que ledit deuxième véhicule comporte un calculateur contrôlant les dispositifs de freinage dudit deuxième véhicule, et comprenant :
- un neuvième moyen de calcul, semblable audit premier moyen de calcul, relié à ladite première liaison pour recevoir ledit premier signal et fournir, en réponse, un huitième signal représentatif du nombre minimal DA de dispositifs de freinage du deuxième véhicule devant être à l'état activé pour obtenir la décélération voulue ; et
- un dixième moyen de calcul, semblable audit deuxième moyen de calcul, qui, à partir dudit huitième signal, établit une sixième liste comportant DA identités de dispositifs de freinage du deuxième véhicule devant être à l'état activé, ledit calculateur du deuxième véhicule utilisant ladite sixième liste pour activer lesdits DA dispositifs de freinage du deuxième véhicule. Le système de freinage peut ainsi être utilisé de façon coordonnée par plusieurs véhicules reliés mécaniquement.

De plus, ledit système, dont les roues du premier et du deuxième véhicule sont chacune pourvues d'un détecteur de patinage, dont le calculateur dudit premier véhicule comporte :
- un troisième moyen de calcul, relié à chacune des sorties de la pluralité desdits détecteurs de patinage relatifs aux roues du premier véhicule, apte à calculer le nombre de patinages de chaque roue dudit premier véhicule pendant une durée déterminée ; et
- un quatrième moyen de calcul recevant lesdits nombres de patinages, apte à déceler l'existence d'au moins N roues (N entier supérieur ou égal à 1) présentant chacune au moins M patinages (M entier supérieur ou égal à 1), et fournissant un troisième signal significatif d'une telle existence de patinages audit deuxième moyen de calcul, ce deuxième moyen de calcul augmentant alors ledit nombre D de dispositifs de freinage devant être à l'état activé pour le faire passer à un nombre supérieur, ladite augmentation dépendant des valeurs du couple M et N, présente l'intérêt d'avoir ledit calculateur dudit deuxième véhicule qui comporte :
- un onzième moyen de calcul, identique audit troisième moyen de calcul, relié à chacune des sorties de la pluralité desdits détecteurs de patinage relatifs aux roues du deuxième véhicule, apte à calculer le nombre de patinages de chaque roue dudit deuxième véhicule pendant une durée déterminée ; et
- un douzième moyen de calcul, identique audit quatrième moyen de calcul, recevant lesdits nombres de patinages relatifs aux roues du deuxième véhicule, apte à déceler l'existence d'au moins N roues (N entier supérieur ou égal à 1) présentant chacune au moins M patinages (M entier supérieur ou égal à 1), et fournissant un neuvième signal du calculateur du deuxième véhicule significatif d'une telle existence de patinages audit dixième moyen de calcul ;
- ce dixième moyen de calcul augmentant alors ledit nombre DA de dispositifs de freinage du deuxième véhicule devant être à l'état activé pour le faire passer à un nombre supérieur DiA, ladite augmentation dépendant des valeurs du couple M et N.

Ainsi, le patinage sur l'un quelconque des véhicules est détecté et peut être corrigé.

De même, ledit système, dont le calculateur dudit premier véhicule comporte un quatrième moyen de calcul apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournissant un quatrième signal significatif d'une telle existence de patinages audit deuxième moyen de calcul (ce deuxième moyen de calcul augmentant alors ledit nombre D de dispositifs de freinage devant être à l'état activé pour le faire passer à un nombre D2j supérieur d'au moins deux unités à D, ladite augmentation dépendant des valeurs des couples M1, N1 et M2, N2, est remarquable en ce que le calculateur du deuxième véhicule comporte un douzième moyen de calcul, semblable au quatrième moyen de calcul, apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournissant un dixième signal significatif d'une telle existence de patinages audit dixième moyen de calcul, ce dixième moyen de calcul augmentant alors ledit nombre DA de dispositifs de freinage devant être à l'état activé pour le faire passer à un nombre D2jA supérieur d'au moins deux unités à DA, ladite augmentation dépendant des valeurs des couples M1, N1 et M2, N2.

Par ailleurs, ledit système, comportant un premier moyen d'affichage de données, ayant une entrée de commande réglable, actionnable par le conducteur pour y entrer des données relatives à la valeur estimée du coefficient de frottement des roues sur le sol, et qui transforme lesdites données en un cinquième signal, représentatif de ladite valeur estimée du coefficient de frottement, ledit cinquième signal étant transmis par une deuxième liaison audit deuxième moyen de calcul du calculateur du premier véhicule, qui modifie, en fonction dudit cinquième signal, le nombre d'identités de dispositifs de freinage de ladite première liste du premier véhicule, est remarquable en ce que ladite deuxième liaison est raccordée au dixième moyen de calcul, qui modifie, en fonction dudit cinquième signal, le nombre DA d'identités de dispositifs de freinage de ladite sixième liste.

De ce fait, le calculateur de chaque véhicule peut optimiser initialement le choix du nombre de dispositifs de freinage à activer.

De même, ledit système, dont les roues du premier et du deuxième véhicule sont chacune pourvues d'un capteur de température et dont le calculateur dudit premier véhicule comporte un cinquième moyen de calcul recevant les informations issues desdits capteurs de température des roues du premier véhicule, et apte à établir une troisième liste des identités des dispositifs de freinage du premier véhicule dont le frein est à une température dont la valeur est comprise entre une valeur de température minimale (Tmin) et une valeur de température maximale (Tmax) pré-établies, et transmettant ladite troisième liste audit deuxième moyen de calcul, ce dernier choisissant prioritairement dans cette troisième liste les identités des dispositifs de freinage constituant ladite première liste du premier véhicule, présente l'intérêt d'avoir le calculateur du deuxième véhicule qui comporte un treizième moyen de calcul, semblable au cinquième moyen de calcul, recevant les informations issues desdits capteurs de température des roues du deuxième véhicule, et apte à établir une huitième liste comportant les identités des dispositifs de freinage du deuxième véhicule dont le frein est à une température dont la valeur est comprise entre une valeur de température minimale (Tmin) et une valeur de température maximale (Tmax) pré-établies, et transmettant ladite huitième liste audit dixième moyen de calcul, ce dixième moyen de calcul choisissant prioritairement dans cette huitième liste les identités des dispositifs de freinage constituant ladite sixième liste.

Le calculateur de chaque véhicule est ainsi apte à gérer au mieux l'utilisation des divers dispositifs de freinage dudit véhicule.

Par ailleurs, ledit système, dont la cabine de conduite comporte un second moyen d'affichage comprenant un afficheur et recevant dudit deuxième moyen de calcul du calculateur du premier véhicule, au moyen d'une troisième liaison, le nombre de dispositifs de freinage devant être à l'état activé en l'absence de patinage, fonction desdits premier et cinquième signaux, ainsi que le nombre (Fi) de dispositifs de freinage effectivement à l'état activé, est remarquable en ce que :
- ladite troisième liaison est raccordée au dixième moyen de calcul, et en ce que
- ledit second moyen d'affichage est apte à afficher le nombre DA ou FA de dispositifs de freinage dudit deuxième véhicule devant être à l'état activé en l'absence de patinage ainsi que le nombre DiA ou FiA de dispositifs de freinage effectivement activés dudit deuxième véhicule.

Le conducteur peut ainsi avoir une vue globale du nombre de dispositifs de freinage de chaque véhicule activés en début de freinage et de ceux effectivement activés en cours de freinage.

De plus, le système tel que défini ci-dessus présente l'avantage de comporter :
- un moyen de téléconduite apte à recevoir et utiliser des données de télémesure et à émettre des commandes de téléconduite ; et
- un bus bidirectionnel relié audit moyen de téléconduite et audit calculateur de chaque véhicule, ce calculateur étant apte à émettre, sur ledit bus, des données de télémesure et à recevoir et utiliser des commandes de téléconduite.

Cette centralisation des données de télémesure et l'émission de données de téléconduite permet de gérer globalement le freinage d'une suite de véhicules reliés mécaniquement.

Les figures du dessin annexé feront bien comprendre comment l'invention peut être réalisée. Sur ces figures, des références identiques désignent des éléments identiques ou semblables.
La figure 1 est un schéma synoptique illustrant l'agencement du système selon l'invention.
La figure 2 est un schéma montrant un train d'atterrissage d'avion équipé d'un dispositif mettant en oeuvre le système de freinage selon l'invention.
La figure 3 est un schéma montrant une suite de véhicules formant un train et comportant une cabine de conduite de ce train.

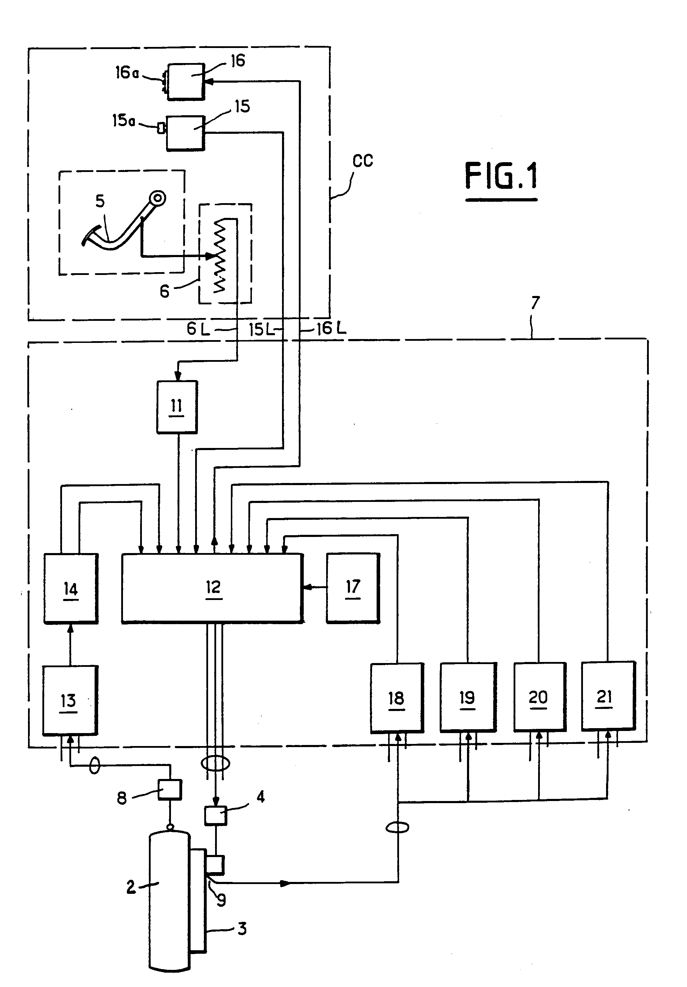

Sur le schéma synoptique de la figure 1, on a représenté une seule roue 2 d'un véhicule (non représenté) pourvue d'un frein 3 commandé en propre par un dispositif de freinage 4. Ce véhicule est piloté par un conducteur situé dans une cabine de conduite CC, dans laquelle il dispose d'un organe réglable 5 d'actionnement volontaire de freinage, qui commande un transducteur 6 fournissant un premier signal représentatif du réglage appliqué par le conducteur sur ledit organe réglable 5. Ce premier signal est appliqué à une première liaison 6L reliée à un calculateur 7 commandant individuellement les divers dispositifs de freinage 4. Chaque roue 2 comporte un détecteur de patinage 8 dont la sortie est reliée individuellement au calculateur 7 ; de même, chaque frein 3 comporte un capteur de température 9 dont la sortie est reliée individuellement au calculateur 7, leurs rôles étant expliqués par la suite. Ledit premier signal est appliqué dans ledit calculateur 7 à un premier moyen de calcul 11, qui transforme ce premier signal en un deuxième signal représentatif du nombre décimal théorique minimal C de dispositifs de freinage 4 devant être à l'état activé pour satisfaire à la commande de décélération voulue du véhicule venant de l'organe réglable 5, C étant fonction, entre autres, du coefficient de frottement des roues 2 sur le sol et de la proportion de masse du véhicule supportée par chaque roue.

Ce nombre C est transmis à un deuxième moyen de calcul 12 du calculateur 7, comportant une pluralité de sorties, chacune reliée en propre à l'un des dispositifs de freinage 4, et par où sont transmises des commandes activant les dispositifs de freinage 4 dont l'identité est dans une première liste établie par ledit deuxième moyen de calcul 12, les autres étant désactivés. Ce deuxième moyen de calcul 12 arrondit C à l'entier immédiatement supérieur ou égal D. Ledit deuxième moyen de calcul 12 dispose d'une deuxième liste, comportant toutes les identités des dispositifs de freinage 4, et permettant d'établir ladite première liste en choisissant les identités des dispositifs de freinage 4 qui doivent être à l'état activé, selon un ordre qui est explicité par la suite.

Le détecteur de patinage 8 de chaque roue 2 est relié individuellement à un troisième moyen de calcul 13 du calculateur 7, qui est apte, à partir de l'ensemble des informations de patinage lui parvenant des détecteurs de patinage 8 des diverses roues 2, à effectuer cycliquement, pendant une durée prédéterminée, un comptage représentatif du patinage que présente chaque roue 2.

Ce troisième moyen de calcul 13 effectue, préalablement au comptage, un filtrage sur les informations de patinage lui parvenant, de façon à éliminer l'influence des patinages de faible durée ou amplitude. Ce comptage peut consister à compter, pour chaque roue 2, le nombre de fois où il y a perte d'adhérence de cette roue 2 pendant la durée prédéterminée, ou bien à mesurer la durée pendant laquelle cette roue 2 a patiné, rapportée à ladite durée prédéterminée, c'est-à-dire un pourcentage représentant la durée cumulée de patinage.

Les informations de patinage de chaque roue 2 ainsi calculées sont transmises à un quatrième moyen de calcul 14 du calculateur 7, chargé de déterminer si les patinages constatés nécessitent de mettre en jeu au moins un dispositif de freinage 4 supplémentaire. Ce quatrième moyen de calcul 14 est apte à déceler la présence d'au moins M patinages (M entier supérieur ou égal à 1) sur au moins N roues (N entier supérieur ou égal à 1), dans le cas où il est effectué un comptage des patinages. Dans le cas où il est effectué un comptage du pourcentage de la durée cumulée de patinage, M représente un tel pourcentage ; pour la simplicité de l'exposé, M est considéré comme un nombre de patinages par la suite.

En cas d'une telle détection d'au moins M1 patinages (M1 étant l'une des valeurs possibles de M), sur au moins N1 roues (N1 étant l'une des valeurs possibles de N), ledit quatrième moyen de calcul 14 transmet un troisième signal au deuxième moyen de calcul 12. Ce dernier relâche le frein des roues qui patinent et ajoute alors une identité d'un dispositif de freinage 4 supplémentaire à ladite première liste des dispositifs de freinage 4 devant être à l'état activé, et émet en sortie une commande d'activation dudit dispositif de freinage 4 supplémentaire. Le processus se répète tant qu'il y a patinage, D passant à une valeur D1 égale à D + 1, puis à une valeur D2 égale à D+2, jusqu'à Di égale à D + i entier positif).

Ledit quatrième moyen de calcul 14 est par ailleurs apte à déceler, à partir des mêmes signaux d'entrée, venant des détecteurs de patinage 8, l'existence d'au moins M1 patinages sur au moins N1 roues ou bien l'existence d'au moins M2 patinages (M2 étant l'une des valeurs possibles de M) sur au moins N2 roues (N2 étant l'une des valeurs possibles de N).

En cas de survenance d'au moins l'un des deux cas ci-dessus (patinages définis par M1 et N1, ou M2 et N2), ledit quatrième moyen de calcul 14 transmet un quatrième signal audit deuxième moyen de calcul 12 qui alors ajoute au moins deux identités supplémentaires à ladite première liste des identités des dispositifs de freinage 4 devant être à l'état active. Ce processus permet, par un choix approprié de M1,M2,N1,N2, de déceler simultanément plusieurs configurations de patinage important et d'y remédier rapidement en mettant en jeu au moins deux dispositifs de freinage 4 supplémentaires. Il est évidemment possible d'extrapoler à la détection de patinages encore plus importants et d'émettre, vers le deuxième moyen de calcul 12, d'autres signaux amenant ce dernier à ajouter au moins trois, ou plus, identités de dispositifs de freinage 4 à ladite première liste. Dans l'exemple décrit, l'effet du troisième signal peut être annulé par la présence du quatrième signal, ou bien maintenu, lesdits troisième et quatrième signaux ayant alors chacun l'effet de faire ajouter une identité d'un dispositif de freinage 4 à la première liste. Le processus se répète tant qu'il y a patinage, le nombre d'identités de dispositifs de freinage 4 de la première liste passant de D à D21, égal à D + 2, puis à D22, égal à D + 4, jusqu'à D2j, égal à D + 2j (j entier positif).

Par ailleurs, selon un mode préférable de réalisation de l'invention, le conducteur dispose aussi, dans la cabine de conduite CC, d'un premier moyen d'affichage 15 de données, comportant une entrée 15a permettant un réglage progressif constituée par exemple d'un curseur, et qui est relié en sortie, par une deuxième liaison 15L, à une entrée dudit deuxième moyen de calcul 12. Ce premier moyen d'affichage 15 permet au conducteur d'entrer, dans ledit deuxième moyen de calcul 12, une donnée représentative de la valeur du coefficient de frottement estimé des roues 2 sur le sol. Cette valeur peut être transmise audit deuxième moyen de calcul 12 sous forme d'un cinquième signal représentatif du rapport égal au coefficient de frottement estimé divisé par un coefficient de frottement moyen pré-établi. Ledit deuxième moyen de calcul 12 divise alors ledit nombre C par ledit rapport des coefficients de frottement et obtient un nombre décimal théorique E qui est ensuite arrondi à l'entier immédiatement supérieur ou égal, et qui est le nombre de dispositifs de freinage 4 devant être à l'état activé en début de freinage. Ainsi, si le coefficient de frottement estimé est plus faible que le coefficient de frottement moyen pré-établi, ledit rapport est inférieur à 1, et le nombre E est supérieur à C.

Le conducteur dispose aussi, dans la cabine de conduite CC, d'un deuxième moyen d'affichage 16 comportant un afficheur 16a, recevant dudit deuxième moyen de calcul 12, au moyen d'une troisième liaison 16L, le nombre initial de dispositifs de freinage 4 devant être à l'état activé en début de freinage, ainsi qu'un nombre Fi représentant le nombre augmenté d'un nombre correspondant aux effets desdits troisième et quatrième signaux. Pour la simplicité de l'exposé, la commande de freinage issue de l'organe réglable 5 est supposée constante pendant le freinage. Le conducteur peut ainsi voir si des patinages consistants ont eu lieu, traduisant l'existence d'un coefficient de frottement estimé trop faible. Il est alors en mesure de corriger, pour les freinages ultérieurs, la valeur qu'il a établie par ledit premier moyen d'affichage 15.

Comme il a été précédemment indiqué, le nombre E, arrondi supérieurement à F, de dispositifs de freinage 4 devant être à l'état activé en début de freinage dépend de la décélération voulue, demandée au moyen de l'organe réglable 5 d'actionnement volontaire de freinage fournissant le premier signal, et dépend aussi du coefficient de frottement affiché sur le premier moyen d'affichage 15 fournissant le cinquième signal.

Lorsqu' en cours de freinage, au moins l'un de ces deux premier ou cinquième signaux change de valeur, l'état des dispositifs de freinage 4 est susceptible de changer. Ledit deuxième moyen de calcul 12 scrute cycliquement, en sortie respectivement du premier moyen de calcul 11 et du premier moyen d'affichage 15, l'état du deuxième signal, qui traduit celui du premier signal, et l'état du cinquième signal, et calcule le nombre ci-dessus indiqué. Lorsque ce nombre évolue au cours du temps, il se substitue au nombre précédent et sert de base pour la détermination du nombre total Fi de dispositifs de freinage 4 à activer, en tenant compte du patinage. En cas de premier signal venant de l'organe réglable 5 d'actionnement volontaire de freinage indiquant une absence de commande de freinage, le nombre total Fi de dispositifs de freinage 4 à activer est forcé à zéro, quel que soit alors le patinage sur les roues 2 et le nombre de dispositifs de freinage 4 supplémentaires actives.

De façon à s'assurer que l'on utilise de préférence les freins dont la température est comprise entre une température Tmin, voisine de 100 _{°} C, et une température plus élevée Tmax, voisine de 600 _{°} C, au-dessus de laquelle le frein se dégrade plus vite, les freins 3 des diverses roues 2 sont chacun équipés dudit capteur de température 9, dont la sortie est reliée individuellement à un cinquième moyen de calcul 18 du calculateur 7, qui reçoit les informations traduisant les températures mesurées par les divers capteurs de température 9 et établit, à partir de là, une troisième liste comportant les identités des freins 3 dont la température est comprise entre Tmin et Tmax. Les identités des freins 3 de cette troisième liste sont transmis es audit deuxième moyen de calcul 12, qui choisit d'abord dans cette troisième liste les identités des dispositifs de freinage 4 de la première liste, puis ensuite, si nécessaire, dans ladite deuxième liste issue d'une table 17.

Une variante du mode de choix précédent consiste à utiliser un sixième moyen de calcul 19 se substituant audit cinqième moyen de calcul 18, et fournissant audit deuxième moyen de calcul 12 une quatrième liste constituée d'une liste ordonnée des identités des dispositifs de freinage 4 dont la température du frein 3 est comprise entre Tmin et Tmax, ces identités étant ordonnées selon l'écart de température entre la température du frein 3 considéré et Tmin.

Le deuxième moyen de calcul 12 choisit alors, pour constituer ladite première liste, les identités des dispositifs de freinage 4 de cette quatrième liste en commençant par celles relatives à des freins 3 dont la température est la plus proche de Tmin. Ceci permet ainsi de réchauffer prioritairement ces freins 3, et ainsi de maintenir un nombre maximal de freins 3 à une température située dans la plage de température optimale, comprise entre Tmin et Tmax.

Par ailleurs, afin d'éviter d'utiliser des freins 3 qui seraient à une température élevée TM susceptible de les endommager ainsi éventuellement que leur environnement, le calculateur 7 peut comporter un septième moyen de calcul 20 recevant lesdites informations traduisant les températures mesurées par les différents capteurs de température 9.

Ce septième moyen de calcul 20 établit une cinquième liste qu'il transmet au deuxième moyen de calcul 12, liste contenant les identités des dispositifs de freinage 4 dont le frein 3 associé est à une température dépassant TM. Le deuxième moyen de calcul 12 élimine alors de la première liste les identités des dispositifs de freinage 4 apparaissant dans la cinquième liste, et ajoute un nombre d'identités de dispositifs de freinage 4 égal au nombre d'identités de dispositifs de freinage 4 qui viennent d'être éliminées, le choix des identités des dispositifs de freinage 4 ajoutées sur la première liste étant effectué comme expliqué précédemment. En cas de nécessité de freinage d'urgence, il est possible d'avoir une commande, venant du conducteur, qui autorise l'activation des dispositifs de freinage 4 dont le frein 3 est à une température dépassant TM. Cette commande peut, par exemple, être affichée au moyen du curseur 15a, mis pour cette occasion en une position extrême, par exemple celle du côté correspondant à l'affichage du coefficient de frottement le plus faible, cette position pouvant être visiblement séparée de la gamme des affichages de coefficient de frottement, pour éviter toute erreur, et signifiant au calculateur 7 de devoir autoriser l'activation de dispositifs de freinage 4 dont le frein 3 est à une température dépassant TM. Le calculateur 7 peut aussi être automatiquement autorisé à utiliser les freins 3 à température dépassant TM en cas de patinage persistant alors que tous les dispositifs de freinage 4 sont activés. Le second moyen d'affichage 16 recevra alors du calculateur 7 des données indiquant une telle utilisation, de façon à en informer le conducteur.

Dans ce qui vient d'être exposé, on détermine un nombre de dispositifs de freinage 4 nécessaire et suffisant pour obtenir le freinage voulu, en déterminant éventuellement, grâce aux moyens de calcul 18,19 et 20, une liste préférentielle des identités des dispositifs de freinage 4 à mettre dans la première liste.

L'ordre des choix respectifs des diverses identités des dispositifs de freinage 4 de chaque liste autre que la première liste, et destinées à constituer cette première liste, est ci-après expliqué plus en détail.

Selon un premier mode d'établissement de la première liste, le calculateur 7 utilise les dispositifs de freinage 4 selon un ordre préférentiel fixe, par exemple 4a, 4b, 4c, 4d, correspondant respectivement à des freins 3a, 3b, 3c, 3d respectivement relatifs à des roues 2a, 2b, 2c, 2d. Lors du premier freinage, par exemple deux dispositifs de freinage 4a et 4b vont être activés ; lors du deuxième freinage, ils vont encore être activés dans cet ordre et leurs freins 3a et 3b vont passer à plus de Tmin. Lors des freinages suivants, ces mêmes dispositifs de freinage 4a et 4b vont encore être utilisés dans cet ordre, avec éventuellement d'autres si nécessaire. Ainsi les freins 3a et 3b vont rester à plus de Tmin en cas de freinages repétés, du fait de leur inertie thermique, et seront ainsi utilisés dans des conditions optimales lors des freinages suivants. Par ailleurs, les autres dispositifs de freinage 4c et 4d ne seront en général pas utilisés, donc ne s'useront pas.

De façon à répartir l'usure des divers freins 3, l'ordre préférentiel d'utilisation des freins 3 va être modifié lors du cycle thermique suivant, c'est-à-dire après que tous les freins 3 soient revenus à une température TR inférieure à environ Tmin et définissant l'état repos des freins. Cet état repos dans un cycle thermique est déterminé par le calculateur 7, soit par mesure directe de température, en utilisant les capteurs de température 9, soit en modélisant la température des freins 3 en fonction de la constitution du frein 3 et de son activation.

Pour effectuer une détection directe d'un état repos des freins 3 dans un cycle thermique, le calculateur 7 peut comporter un huitième moyen de calcul 21, recevant individuellement les informations issues des divers capteurs de température 9, et fournissant au deuxième moyen de calcul 12 un sixième signal lorsque tous les freins 3 sont à une température inférieure à la valeur de repos TR prédéterminée.

Ce changement d'ordre préférentiel peut aussi être commandé à partir d'une base de temps, contenue dans le calculateur 7, qui commande cycliquement un tel changement, par exemple tous les jours, ce changement étant retardé jusqu'à refroidissement de tous les freins 3 à une température inférieure à TR si le cycle thermique de freinage est à l'état actif qui est l'état autre que l'état repos, c'est-à-dire qu'au moins un frein 3 est à plus de TR. Ce changement peut consister en une permutation circulaire, le calculateur 7 comportant un pointeur indiquant, dans la deuxième liste des identités des dispositifs de freinage 4, la première identité d'un dispositif de freinage 4 qui peut être activé, l'identité suivante' d'un dispositif de freinage 4 pouvant être activé étant la suivante de ladite deuxième liste, par exemple, ou celle à l'autre bout de cette deuxième liste si l'on est en fin de liste et qu'il n'y a ainsi pas de suivante dans cette deuxième liste. Il est tout aussi possible de prévoir un choix aléatoire ou pseudo-aléatoire tel que l'on aboutisse à une utilisation substantiellement égale des divers freins 3 sur leur durée de vie.

Lorsqu'une autre liste d'identités de dispositifs de freinage 4 est disponible, telle que troisième, quatrième ou cinquième liste, l'ordre des choix précédents est modifie.

Ainsi, dans le cas d'existence de la troisième liste, l'ordre d'établissement de la première liste est établi comme précédemment indiqué mais en reportant à la fin de cette première liste, dans l'ordre ou elles sont, les identités des dispositifs de freinage 4 n'apparaissant pas sur cette troisième liste.

Dans le cas de l'existence de la quatrième liste, cette dernière, qui est ordonnée, est reportée dans la mesure des besoins, dans le même ordre, en début de la première liste, cette première liste étant complétée ensuite au moyen des identités des autres dispositifs de freinage 4 non encore inscrites sur cette première liste, et selon l'ordre de choix déterminé pour la deuxième liste.

L'existence de la cinquième liste a pour effet de supprimer, de la première liste, les identités des dispositifs de freinage 4 apparaissant dans la cinquième liste, sauf ordre contraire venant du conducteur.

Selon un autre mode de choix, à l'intérieur d'un même cycle thermique à l'état actif, l'ordre de choix des divers dispositifs de freinage 4 peut être modifié de la façon suivante. Les freins 3 dont la température est dans la plage entre Tmin et Tmax sont choisis de façon préférentielle. Par exemple, le deuxième moyen de calcul 12 utilise l'ordre préférentiel défini ci-dessus, en reportant en fin de première liste les freins 3 à température ex terne à ladite plage. Ainsi, on utilise prioritairement les freins 3 ayant une température optimale de fonctionnement. Si le nombre de tels freins 3 est insuffisant, on utilise alors les freins 3 dont la température est soit inférieure à cette plage, soit supérieure à cette plage mais sans dépasser une température TM supérieure ou égale à Tmax.

Selon une variante, et toujours à l'intérieur d'un maie cycle thermique, il est de maie possible de choisir de façon préférentielle les freins 3 dont la température est dans la plage optimale et près de la limite basse Tmin. Ainsi, les freins 3 dont la température est susceptible de repasser en dessous de Tmin sont-ils réchauffés les premiers, ce qui éloigne leur température de cette limite inférieure Tmin et maintient ainsi un nombre maximal de freins 3 dans ladite plage de température.

Par ailleurs, toujours à l'intérieur d'un cycle thermique, le calculateur 7 peut décider de désactiver les dispositifs de freinage 4 dont les freins 3 sont à une température dépassant la température TM, comme cela a été expliqué, et dont les identités sont inscrites dans la cinquième liste. Ceci est un processus asynchrone vis-à-vis des processus séquentiels ci-dessus décrits, puisque la détection d'un dépassaient de TM peut se produire à tout instant pendant le freinage. Le deuxième moyen de calcul 12 commande alors la désactivation de tout dispositif de freinage 4 dont le frein 3 est à température supérieure à TM, en supprimant l'identité de celui-ci de la première liste, et active un dispositif de freinage 4 supplémentaire, choisi selon le mode de sélection alors utilisé, en inscrivant son identité sur la première liste, comme décrit précédemment.

La présence d'une cinquième liste non vide interdit évidemment d'inscrire les identités des dispositifs de freinage 4 qui y sont inscrites pour constituer ultérieurement la première liste. En cas de nécessité de freinage d'urgence, la commande, venant du pilote, qui autorise l'activation des freins à température dépassant TM annule alors cette interdiction.

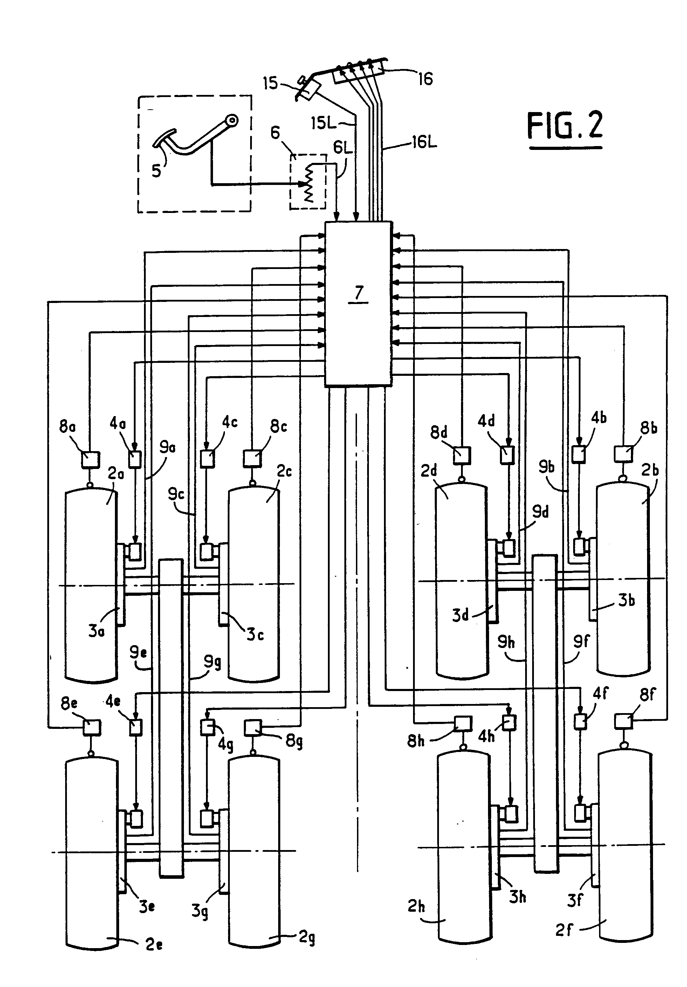

La figure 2 concerne l'application de la présente invention au cas d'un aéronef. Celui-ci comporte un train d'atterrissage constitué de boggies comportant des roues 2 repérées 2a à 2h. L'ensemble de ces roues 2 présente une symétrie par rapport au plan de symétrie de l'aéronef. Chaque roue 2 est pourvue d'un frein 3, respectivement répété 3a à 3h, commandé par un dispositif de freinage 4, respectivement répété 4a à 4h, ainsi que d'un détecteur de patinage 8, respectivement repéré 8a à 8h, et d'un capteur de température 9, respectivement repéré 9a à 9h. Un calculateur 7 commande les dispositifs de freinage 4 et reçoit les informations en sortie des détecteurs de patinage 8 et des capteurs de température 9.

Le pilote dispose d'un organe réglable 5 d'actionnement volontaire de freinage suivi d'un transducteur 6 dont la sortie est reliée au premier moyen de calcul 11 du calculateur 7. Il dispose aussi d'un premier moyen d'affichage 15 de la valeur du coefficient de frottement estimé des roues 2 sur le sol. Un deuxième moyen d'affichage 16, commandé par le deuxième moyen de calcul 12, permet au pilote d'avoir connaissance du nombre D de dispositifs de freinage 4 activés initialement lors d'un freinage, ainsi que du nombre Fi de dispositifs de freinage 4 effectivement activés.

De façon à conserver un équilibrage dans le freinage des roues 2 symétriques deux à deux par rapport au plan de symétrie de l'aéronef, les deux dispositifs de freinage tels 4a et 4b de chaque tel couple de roues, tel 2a et 2b, sont commandés à l'identique. Ceci peut être réalisé en n'ayant qu'une commande unique de freinage par couple de roues 2a et 2b, par exemple par un circuit hydraulique commun aux deux dispositifs de freinage 4 d'un tel couple de roues 2a et 2b. Il est aussi possible de conserver une indépendance matérielle entre les deux dits dispositifs de freinage 4a et 4b d'un couple 2a et 2b, et d'assurer une similitude des commandes sur ces dispositifs de freinage 4. Ceci est réalisé au niveau de la première liste, en y inscrivant systématiquement, par exemple, tout d'abord une identité d'un dispositif de freinage 4, choisie comme expliqué précédemment, en inscrivant ensuite l'identité du dispositif de freinage 4 de la deuxième roue 2 du couple, puis en poursuivant à nouveau l'établissement de ladite première liste en alternant, comme indiqué ci-dessus, avec l'inscription de l'identité du dispositif de freinage 4 de la deuxième roue du couple.

Dans le cas de l'existence de la cinquième liste, correspondant à des freins 3 à température excessive, le deuxième moyen de calcul 12 considère la température la plus élevée de chaque paire de roues 2, et élimine ainsi, de la première liste, les paires d'identités de dispositifs de freinage 4 dont au moins l'une apparaît dans ladite cinquième liste.

La façon de connaître l'identité d'un dispositif de freinage 4, à partir de l'identité du dispositif de freinage 4 associé, peut consister à adresser une mémoire morte fournissant cette identité, ou simplement en associant une identité, représentée par un nombre pair, à une identité représentée par le nombre impair juste inférieur. Cela permet de consulter rapidement les informations relatives à chaque roue 2 et d'établir la première liste en fonction des informations relatives aux deux roues 2 de chaque couple.

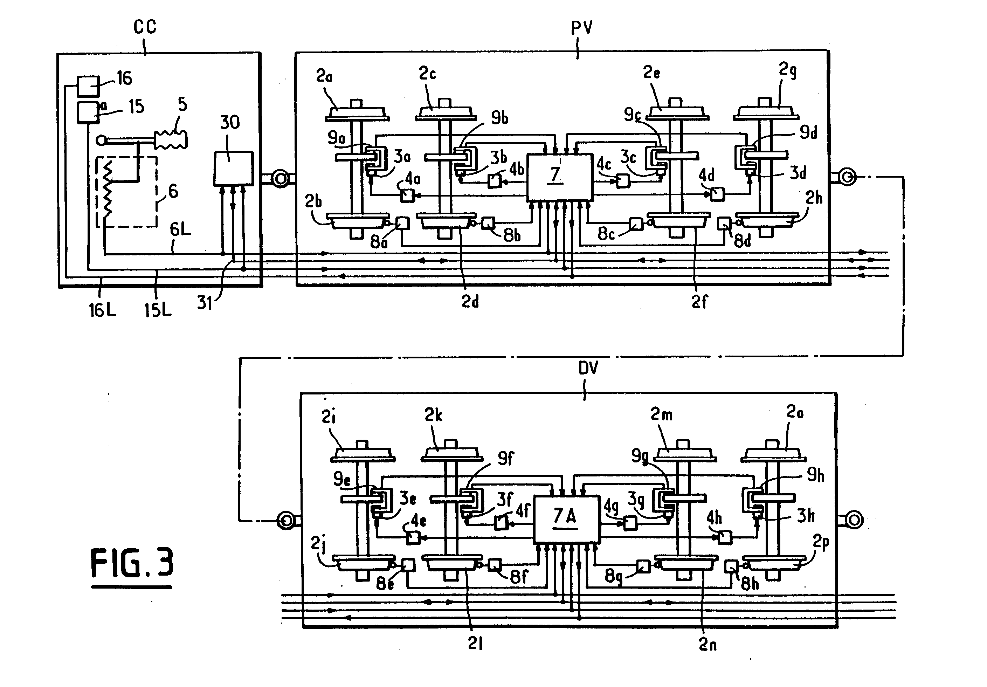

La figure 3 représente une application de la présente invention dans le cas d'une suite de véhicules composant un train. Une cabine de conduite CC, située dans un véhicule, comporte un moyen de téléconduite 30, un organe réglable 5 d'actionnement volontaire de freinage attaquant un transducteur 6, un premier moyen d'affichage 15 permettant d'afficher la valeur estimée du coefficient de frottement des roues 2 sur le sol, et un second moyen d'affichage 16 permettant au conducteur de prendre connaissance du nombre de dispositifs de freinage 4 activés en début de freinage et de ceux activés effectivement, pour chaque véhicule. La suite de véhicules comporte un premier véhicule (PV) et un deuxième véhicule (DV) chacun ayant un calculateur 7 tel que décrit, respectivement repéré 7,7A, pouvant comporter respectivement des moyens de calcul semblables aux moyens de calcul 11 à 21 décrits, appelés respectivement premier à huitième moyen de calcul et neuvième à seizième moyen de calcul. Ce calculateur 7A utilise des septième à douzième signaux, respectivement homologues des premier à sixième signaux du calculateur 7. De même, ce calculateur 7A engendre des sixième à dixième tables, respectivement homologues des premières à cinquième tables. Il définit des nombres CA, DA, D1A, D2A, DiA, D21A, D22A, D2jA, EA, FA, FiA respectivement homologues des nombres C, D, D1, D2, Di, D21, D22, D2j E, F, Fi. Ces calculateurs 7 et 7A commandent le freinage de roues 2, respectivement 2a à 2h et 2i à 2p, au moyen de freins 3, respectivement 3a à 3d et 3e à 3h commandés par des dispositifs de freinage 4 individuels, respectivement 4a à 4d et 4e à 4h, l'une des deux roues 2 d'un même essieu comportant un détecteur de patinage 8, respectivement 8a à 8d et 8e à 8h, et un capteur de température 9 du frein associé, respectivement 9a à 9d et 9e à 9h, reliés au calculateur 7,7A respectif, comme précédemment décrit.

Le transducteur 6 est relié par la première liaison 6L à chacune des entrées correspondantes du premier et neuvième moyen de calcul 11 des calculateurs respectifs 7 et 7A, ainsi qu'à une entrée du moyen de téléconduite 30. La sortie du premier moyen d'affichage 15 est reliée à l'entrée correspondante du deuxième et dixième moyen de calcul, du type du moyen de calcul 12, des calculateurs respectifs 7 et 7A, ainsi qu'à une entrée du moyen de téleconduite 30, par une deuxième liaison 15L. Le second moyen d'affichage 16 dispose d'entrées respectivement reliées à la sortie respective du deuxième et dixième moyen de calcul du type 12 des calculateurs respectifs 7 et 7A, par une troisième liaison 16L, représentée symboliquement par un seul fil.

Par ailleurs, un bus bidirectionnel 31 de transmission de données relie ledit moyen de téléconduite 30 à chacun des calculateurs 7,7A.

Lors d'un freinage, chaque calculateur 7,7A de véhicule détermine le nombre D,DA et Fi,FiA de dispositifs de freinage 4 du véhicule concerné à activer en fonction de la décélération voulue, du coefficient de frottement estimé des roues 2 sur le sol, du patinage et de la température des freins 3 DA et FiA étant respectivement les homologues de D et Fi relatifs au calculateur 7A. Ainsi, le nombre de dispositifs de freinage 4 peut-il être différent d'un véhicule à l'autre. De plus, chaque calculateur 7,7A de véhicule peut informer le moyen de téléconduite 30 de l'état de ses dispositifs de freinage 4, tel qu'activation et température, en lui envoyant des données de télémesure. Ce moyen de téléconduite 30 est alors à même de transmettre, à tous les calculateurs 7,7A, des commandes de téléconduite visant à augmenter ou diminuer le nombre de dispositifs de freinage 4 activés de chaque véhicule. Lesdites transmissions de données de télémesure et de données de téléconduite s'effectuent au moyen dudit bus bidirectionnel 31.

Le moyen de téléconduite 30 permet ainsi de mieux répartir l'effort de freinage entre les voitures et ainsi d'optimiser l'utilisation des divers freins 3.

Les deux exemples d'application donnés ci-dessus à titre explicatif et non limitatif peuvent comporter des variantes. Ainsi, les transmissions d'informations ou de données entre les divers afficheurs, capteurs, détecteurs et le calculateur 7 du véhicule, qui ont été décrites comme utilisant des liaisons individuelles, peuvent-elles être multi- plexées sur un bus. L'utilisation d'une telle variante, ou d'autres, ne sortirait pas du cadre de la présente invention.

## Revendications

1. Système pour la commande de dispositifs de freinage d'un véhicule piloté par un conducteur et ayant une pluralité de roues (2) pourvues de freins (3) à disque au carbone commandés par un dispositif de freinage (4), ledit système étant pourvu :
- d'un organe réglable (5) d'actionnement volontaire de freinage, actionnable par le conducteur ;
- d'un transducteur (6) commandé par ledit organe réglable (5) d'actionnement volontaire de freinage et délivrant un premier signal représentatif du réglage de cet organe réglable (5), imposé par le conducteur pour obtenir une décélération voulue dudit véhicule ;
- d'un calculateur (7) qui commande lesdits dispositifs de freinage (4) ; et
- d'une première liaison (6L) reliant le transducteur (6) audit calculateur (7) pour lui transmettre ledit premier signal ;
caractérisé en ce que ledit calculateur (7) comporte :
- un premier moyen de calcul (11) relié à ladite première liaison (6L), recevant ledit premier signal et fournissant, en réponse, un deuxième signal représentatif du nombre minimal D de dispositifs de freinage (4) devant être à l'état activé pour obtenir la décélération voulue ; et
- un deuxième moyen de calcul (12), qui, à partir dudit deuxième signal, établit une première liste de D identités de dispositifs de freinage (4) devant être à l'état activé, ledit calculateur (7) utilisant ladite première liste pour activer lesdits D dispositifs de freinage.

2. Système selon la revendication 1, pour un véhicule muni, à chaque roue, d'un détecteur de patinage (8) des roues (2) sur le sol,
caractérisé en ce que ledit calculateur (7) comporte :
- un troisième moyen de calcul (13), relié à chacune des sorties de la pluralité desdits détecteurs de patinage (8), apte à calculer le nombre de patinages de chaque roue (2) pendant une durée déterminée ; et
- un quatrième moyen de calcul (14) recevant lesdits nombres de patinages, apte à déceler l'existence d'au moins N roues (N entier supérieur ou égal à 1) présentant chacune au moins M patinages (M entier supérieur ou égal à 1), et fournissant un troisième signal significatif d'une telle existence de patinages audit deuxième moyen de calcul (12), ce deuxième moyen de calcul (12) augmentant alors ledit nombre D de dispositifs de freinage (4) devant être à l'état activé pour le faire passer à un nombre supérieur Di, ladite augmentation dépendant des valeurs du couple M et N.

3. Système selon la revendication 2,
caractérisé en ce que ledit quatrième moyen de calcul (14) est apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournit un quatrième signal significatif d'une telle existence de patinages audit deuxième moyen de calcul (12), ce deuxième moyen de calcul (12) augmentant alors ledit nombre D de dispositifs de freinage (4) devant être à l'état activé pour le faire passer à un nombre D2j supérieur d'au moins deux unités à D, ladite augmentation dépendant des valeurs des couples M1, N1 et M2, N2.

4. Système selon l'une quelconque des revendications précédentes,
caractérisé en ce qu'il comporte un premier moyen d'affichage (15) de données ayant une entrée (15a) de commande réglable, actionnable par le conducteur pour y entrer des données relatives à la valeur estimée du coefficient de frottement des roues (2) sur le sol, et qui transforme lesdites données en un cinquième signal, représentatif de ladite valeur estimée du coefficient de frottement, ledit cinquième signal étant transmis par une deuxième liaison (15L) audit deuxième moyen de calcul (12) qui modifie, en fonction dudit cinquième signal, le nombre D ou Di d'identités de dispositifs de freinage (4) de ladite première liste en un nombre F ou Fi (entier positif).

5. Système selon l'une quelconque des revendications précédentes,
caractérisé en ce que ledit calculateur (7) comporte une table (17) fournissant audit deuxième moyen de calcul (12) une deuxième liste ordonnée des identités desdits dispositifs de freinage (4), ledit deuxième moyen de calcul (12) choisissant les identités des dispositifs de freinage (4) constituant ladite première liste à partir d'un endroit prédéterminé de ladite deuxième liste et en la parcourant toujours dans le même sens.

6. Système selon l'une quelconque des revendications précédentes, comportant une pluralité de capteurs de température (9), chacun associé à un frein (3),
caractérisé en ce que le calculateur (7) comporte un cinquième moyen de calcul (18) recevant les informations issues desdits capteurs de température (9), et apte à établir une troisième liste des identités des dispositifs de freinage (4) dont le frein (3) est à une température dont la valeur est comprise entre une valeur de température minimale (Tmin) et une valeur de température maximale (Tmax) préétablies, et transmettant ladite troisième liste audit deuxième moyen de calcul (12), ce dernier choisissant prioritairement dans cette troisième liste les identités des dispositifs de freinage (4) constituant ladite première liste.

7. Système selon l'une quelconque des revendications 1 à 5, comportant une pluralité de capteurs de température (9), chacun associé à un frein (3),
caractérisé en ce que le calculateur (7) comporte un sixième moyen de calcul (19), recevant les informations issues desdits capteurs de température (9), et apte à établir une quatrième liste ordonnée des identités des dispositifs de freinage (4) dont le frein (3) est à une température dont la valeur est comprise entre la valeur de la température minimale (Tmin) et la valeur de la température maximale (Tmax) préétablies, ladite quatrième liste étant ordonnée en fonction de l'écart de température entre la température de chaque frein considéré et ladite température minimale (Tmin), ledit sixième moyen de calcul (19) étant relié audit deuxième moyen de calcul (12) et lui fournissant ladite quatrième liste, ledit deuxième moyen de calcul (12) choisissant prioritairement dans cette quatrième liste les identités des dispositifs de freinage (4) constituant ladite première liste.

8. Système selon l'une quelconque des revendications précédentes, et comportant une pluralité de capteurs de température (9), chacun associé à un frein (3),
caractérisé en ce que le calculateur (7) comporte un septième moyen de calcul (20), recevant les informations issues desdits capteurs de température (9), et apte à établir une cinquième liste des identités des dispositifs de freinage (4) dont le frein (3) est à une température dépassant une température maximale de sécurité (TM) pré-établie, et transmettant ladite cinquième liste audit deuxième moyen de calcul (12), lequel est apte à éliminer, de ladite première liste des identités des dispositifs de freinage (4) devant être à l'état activé, lesdites identités des dispositifs de freinage (4) de ladite cinquième liste, et apte à ajouter, à ladite première liste, un nombre d'identités de dispositifs de freinage (4) égal au nombre d'identités de dispositifs de freinage (4) venant d'être éliminées de ladite première liste.

9. Système selon l'une quelconque des revendications précédentes, et comportant une pluralité de capteurs de température (9), chacun associé à un frein (3),
caractérisé en ce que le calculateur (7) comporte un huitième moyen de calcul (21) recevant les informations issues desdits capteurs de température (9) apte à détecter que chacun des freins (3) est à une température inférieure à une température de repos (TR), déterminant l'état repos lors d'un cycle thermique des freins (3), et transmettant un sixième signal, significatif d'une telle détection, audit deuxième moyen de calcul (12), lequel, après réception d'un tel sixième signal, modifie ledit ordre d'établissement des identités des dispositifs de freinage (4) de ladite première liste.

10. Système selon la revendication 9,
caractérisé en ce que ledit deuxième moyen de calcul (12) est apte, après réception dudit sixième signal, à modifier ledit ordre d'établissement des identités des dispositifs de freinage (4) de ladite première liste, de façon telle que chacun desdits dispositifs de freinage (4) soit utilisé le premier environ autant de fois que les autres l'on été, en se rapportant à un grand nombre de cycles thermiques.

11. Système selon l'une quelconque des revendications précédentes,
caractérisé en ce qu'il comporte un second moyen d'affichage (16) comprenant un afficheur (16a) et recevant dudit deuxième moyen de calcul (12), au moyen d'une troisième liaison (16L), le nombre D ou F de dispositifs de freinage (4) devant être à l'état activé en l'absence de patinage, fonction desdits premier et cinquième signaux, ainsi que le nombre Di ou Fi de dispositifs de freinage (4) effectivement à l'état activé.

12. Système selon l'une quelconque des revendications précédentes, appliqué à un aéronef, ayant un train d'atterrissage comportant plusieurs couples de roues appariées (2a,2b), chacune disposée symétriquement vis-à-vis de l'autre du couple par rapport au plan de symétrie de l'aéronef, caractérisé en ce que ledit deuxième moyen de calcul (12) maintient dans un état identique, activé ou désactivé, les deux dispositifs de freinage (4a,4b) des roues appariées (2a,2b) d'un couple.

13. Système selon la revendication 1, contrôlant les freins d'un premier véhicule (PV) auquel est attelé au moins un deuxième véhicule (DV) ayant une pluralité de roues (2) pourvues de freins (3) à disque au carbone commandés par un dispositif de freinage (4),
caractérisé en ce que ledit deuxième véhicule (DV) comporte un calculateur (7A) contrôlant les dispositifs de freinage (4) dudit deuxième véhicule (DV), et comprenant :
- un neuvième moyen de calcul, semblable audit premier moyen de calcul (11), relié à ladite première liaison (6L), pour recevoir ledit premier signal et fournir, en réponse, un huitième signal représentatif du nombre minimal DA de dispositifs de freinage (4) du deuxième véhicule (DV) devant être à l'état activé pour obtenir la décélération voulue ; et
- un dixième moyen de calcul, semblable audit deuxième moyen de calcul (12), qui, à partir dudit huitième signal, établit une sixième liste comportant DA identités de dispositifs de freinage (4) du deuxième véhicule (DV) devant être à l'état activé, ledit calculateur (7A) du deuxième véhicule (DV) utilisant ladite sixième liste pour activer lesdits DA dispositifs de freinage (4) du deuxième véhicule (DV).

14. Système selon la revendication 13, dont les roues (2) du premier (PV) et du deuxième (DV) véhicule sont chacune pourvues d'un détecteur de patinage (8), et dont le calculateur (7) dudit premier véhicule (PV) comporte :
- un troisième moyen de calcul (13) relié à chacune des sorties de la pluralité desdits détecteurs de patinage (8) relatifs aux roues (2) du premier véhicule (PV), apte à calculer le nombre de patinages de chaque roue (2) dudit premier véhicule (PV) pendant une durée déterminée ; et
- un quatrième moyen de calcul (14) recevant lesdits nombres de patinages, apte à déceler l'existence d'au moins N roues (N entier supérieur ou égal à 1) présentant chacune au moins M patinages (M entier supérieur ou égal à 1), et fournissant un troisième signal significatif d'une telle existence de patinages audit deuxième moyen de calcul (12), ce deuxième moyen de calcul (12) augmentant alors ledit nombre D de dispositifs de freinage (4) devant être à l'état activé pour le faire passer à un nombre supérieur, ladite augmentation dépendant des valeurs du couple M et N,
caractérisé en ce que ledit calculateur (7A) dudit deuxième véhicule (DV) comporte :
- un onzième moyen de calcul, identique audit troisième moyen de calcul (13), relié à chacune des sorties de la pluralité desdits détecteurs de patinage (8) relatifs aux roues (2) du deuxième véhicule (DV), apte à calculer le nombre de patinages de chaque roue (2) dudit deuxième véhicule (DV) pendant ladite durée déterminée ; et
- un douzième moyen de calcul, identique audit quatrième moyen de calcul (14) recevant lesdits nombres de patinages relatifs aux roues (2) du deuxième véhicule (DV), apte à déceler l'existence d'au moins N roues présentant chacune au moins M patinages, et fournissant un neuvième signal du calculateur (7A) du deuxième véhicule (DV) significatif d'une telle existence de patinages de roues (2) du deuxième véhicule (DV) audit dixième moyen de calcul, ce dixième moyen de calcul augmentant alors ledit nombre DA de dispositifs de freinage (4) du deuxième véhicule (DV) devant être à l'état activé pour le faire passer à un nombre supérieur DiA, ladite augmentation dépendant des valeurs du couple M et N.

15. Système selon la revendication 14, et dont le calculateur (7) dudit premier véhicule (PV) comporte un quatrième moyen de calcul (14) apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournissant un quatrième signal significatif d'une telle existence de patinages audit deuxième moyen de calcul (12), ce deuxième moyen de calcul (12) augmentant alors ledit nombre D de dispositifs de freinage (4) devant être à l'état activé pour le faire passer à un nombre D2j supérieur d'au moins deux unités à D, ladite augmentation dépendant des valeurs des couples M1, N1 et M2, N2,
caractérisé en ce que le calculateur (7A) du deuxième véhicule (DV) comporte un douzième moyen de calcul, semblable au quatrième moyen de calcul (14) apte à déceler l'existence simultanée d'au moins N1 roues (N1 : entier supérieur ou égal à 1) présentant chacune au moins M1 patinages (M1 : entier supérieur ou égal à 1), ainsi que d'au moins N2 roues (N2 : entier supérieur ou égal à 1) présentant chacune M2 patinages (M2 : entier supérieur ou égal à 1), et fournissant un dixième signal significatif d'une telle existence de patinages audit dixième moyen de calcul, ce dixième moyen de calcul augmentant alors ledit nombre DA de dispositifs de freinage (4) devant être à l'état activé pour le faire passer à un nombre D2jA supérieur d'au moins deux unités à DA, ladite augmentation dépendant des valeurs des couples M1, N1 et M2, N2.

16. Système selon l'une des revendications 13 ou 15, comportant un premier moyen d'affichage (15) de données, ayant une entrée (15a) de commande réglable, actionnable par le conducteur pour y entrer des données relatives à la valeur estimée du coefficient de frottement des roues (2) sur le sol, et qui transforme lesdites données en un cinquième signal, représentatif de ladite valeur estimée du coefficient de frottement, ledit cinquième signal étant transmis par une deuxième liaison (15L) audit deuxième moyen de calcul (12) du calculateur (7) du premier véhicule (PV), qui modifie, en fonction dudit cinquième signal, le nombre d'identités de dispositifs de freinage (4) de ladite première liste du premier véhicule (PV),
caractérisé en ce que ladite deuxième liaison (15L) est raccordée au dixième moyen de calcul, qui modifie, en fonction dudit cinquième signal, le nombre DA d'identités de dispositifs de freinage (4) de ladite sixième liste.

17. Système selon l'une quelconque des revendications 13 à 16, dont les roues (2) du premier (PV) et du deuxième (DV) véhicule sont chacune pourvues d'un capteur de température (9) et dont le calculateur (7) dudit premier véhicule (PV) comporte un cinquième moyen de calcul (18) recevant les informations issues desdits capteurs de température (9) des roues (2) du premier véhicule (PV), et apte a établir une troisième liste des identités des dispositifs de freinage (4) du premier véhicule (PV) dont le frein (3) est à une température dont la valeur est comprise entre une valeur de température minimale (Tmin) et une valeur de température maximale (Tmax) pré-établies, et transmettant ladite troisième liste audit deuxième moyen de calcul (12), ce dernier choisissant prioritairement dans cette troisième liste les identités des dispositifs de freinage (4) constituant ladite première liste du premier véhicule (PV),
caractérisé en ce que le calculateur (7A) du deuxième véhicule (DV) comporte un treizième moyen de calcul, semblable au cinquième moyen de calcul (18), recevant les informations issues desdits capteurs de température (9) des roues (2) du deuxième véhicule (DV), et apte à établir une huitième liste comportant les identités des dispositifs de freinage (4) du deuxième véhicule (DV) dont le frein (3) est à une température dont la valeur est comprise entre une valeur de température minimale (Tmin) et une valeur de température maximale (Tmax) pré-établies, et transmettant ladite huitième liste audit dixième moyen de calcul, ce dixième moyen de calcul choisissant prioritairement dans cette huitième liste les identités des dispositifs de freinage (4) constituant ladite sixième liste.

18. Système selon l'une quelconque des revendications 13 à 17, comportant un second moyen d'affichage (16) comprenant un afficheur (16a) et recevant dudit deuxième moyen de calcul (12) du calculateur (7) du premier véhicule (PV), au moyen d'une troisième liaison (16L), le nombre D de dispositifs de freinage (4) devant être à l'état activé en l'absence de patinage des roues (2) du premier véhicule (PV), fonction desdits premier et cinquième signaux, ainsi que le nombre Di ou Fi de dispositifs de freinage (4) effectivement à l'état activé,
caractérisé en ce que :
- ladite troisième liaison (16L) est raccordée au dixième moyen de calcul, et en ce que
- ledit second moyen d'affichage (16) est apte à afficher le nombre DA ou FA de dispositifs de freinage (4) dudit deuxième véhicule (DV) devant être à l'état activé en l'absence de patinage des roues (2) du deuxième véhicule (DV), ainsi que le nombre DiA ou FiA de dispositifs de freinage (4) effectivement activés dudit deuxième véhicule (DV).

19. Système selon l'une quelconque des revendications 13 à 18,
caractérisé en ce qu'il comporte :
- un moyen de téléconduite (30) apte à recevoir et utiliser des données de télémesure et à émettre des commandes de téléconduite ; et
- un bus bidirectionnel (31) relié audit moyen de téléconduite (30) et audit calculateur (7,7A) de chaque véhicule (PV,DV), ce calculateur (7,7A) étant apte à émettre, sur ledit bus (31), des données de télémesure et à recevoir et utiliser des commandes de téléconduite.

## Claims

1. A system for controlling the braking devices of
a vehicle driven by a driver and having a plurality of wheels (2) provided with carbon disk brakes (3) controlled by braking devices (4), said system being provided with:
an adjustable member (5) for voluntary actuation of braking and actuatable by the driver;
a transducer (6) controlled by said adjustable member (5) for voluntary actuation of braking, and delivering a first signal representative of the adjustment of said adjustable member (5) as set by the driver to obtain desired deceleration of said vehicle;
a computer (7) which controls said braking devices (4); and
a first link (6L) connecting the transducer (6) to said computer (7) to transmit said first signal thereto;
the system being characterized in that said computer (7) includes:
first calculation means (11) connected to said first link (6L), receiving said first signal, and responding thereto by supplying a second signal representative of a minimum number D of braking devices (4) that ought to be in the activated state to obtain the desired deceleration; and
second calculation means (12) which respond to said second signal to draw up a first list of D identities of braking devices (4) that ought to be in the activated state, said computer (7) using said first list to activate said D braking devices.

2. A system according to claim 1, for a vehicle provided on each wheel with a skid detector (8) for detecting wheel skid on the ground, the system being characterized in that said computer (7) includes:
third calculation means (13) connected to each of the outputs of the plurality of said skid detectors (8), and suitable for calculating the number of skids per wheel (2) during a determined duration; and
fourth calculation means (14) receiving said skid numbers, and suitable for detecting the existing of at least N wheels, each presenting at least M skids, where N and M are integers not less than 1, and supplying a third signal indicating that such skids exist to said second calculation means (12), said second calculation means (12) then increasing said number D of braking devices (4) that ought to be in the activated state to raise it to a higher number Di, the size of said increase depending on the pair of values M and N.

3. A system according to claim 2, characterized in that said fourth calculation means (14) is suitable for detecting the simultaneous existence both of at least N1 wheels, each presenting at least M1 skids, where N1 and M1 are integers not less than 1, and of at least N2 wheels each presenting M2 skids, where N2 and M2 are integers not less than 1, and supplying a fourth signal representative of the existence of such skids to said second calculation means (12), said second calculation means (12) then increasing said number D of braking devices (4) that ought to be in the activated state to raise it to a number D2j that is at least two units greater than D, the size of said increase depending on the pairs of values M1, N1 and M2, N2.

4. A system according to any preceding claim, characterized in that it includes data input means (15) having an adjustably controllable input (15a) suitable for actuation by the driver to enter data relating to the estimated value of the coefficient of friction between the wheels (2) and the ground, the input means transforming said data into a fifth signal representative of said estimated value of the coefficient of friction, said fifth value being transmitted via a second link (15L) to said second calculation means (12) which in turn changes, as a function of said fifth signal, the number D or Di of identities of braking devices (4) in said first list to a number F or Fi, where F and Fi are positive integers.

5. A system according to any preceding claim, characterized in that said computer (7) includes a table (17) supplying said second calculation means (12) with an ordered second list of identities of said braking devices (4), said second calculation means (12) selecting the identities of braking devices (4) that are to make up said first list by starting from a predetermined position in said second list, and always running through said second list in the same direction.

6. A system according to any preceding claim, including a plurality of temperature sensors (9) each associated with a respective brake (3), the system being characterized in that the computer (7) includes fifth calculation means (18) receiving data from said temperature sensors (9) and suitable for drawing up a third list of identities of braking devices (4) whose brakes (3) are at temperatures lying in a range between a pre-established minimum temperature value Tmin, and a pre-established maximum temperature value Tmax, and transmitting said third list to said second calculation means (12) which gives priority to the identities of braking devices (4) in said third list when drawing up said first list.

7. A system according to any one of claims 1 to 5, including a plurality of temperature sensors (9) associated with respective brakes (3), the system being characterized in that the computer (7) includes sixth calculation means (19) receiving the data from said temperature sensors (9) and suitable for drawing up an ordered fourth list of identities of braking devices (4) whose brakes (3) are at temperatures lying between a pre-established minimum temperature Tmin and a pre-established maximum temperature Tmax, said fourth list being ordered as a function of the difference in temperature between the temperature of the brake under consideration and said minimum temperature Tmin, said sixth calculation means (19) being connected to said second calculation means (12) and supplying it with said fourth list, said second calculation means (12) giving priority to the identities of braking devices (4) in said fourth list when drawing up said first list.

8. A system according to any preceding claim, and including a plurality of temperature sensors (9) each associated with a respective brake (3), the system being characterized in that the computer (7) includes seventh calculation means (20) receiving the data from said temperature sensors (9) and suitable for establishing a fifth list of identities of braking devices (4) whose brakes (3) are at temperatures exceeding a pre-established safety maximum temperature TM, and transmitting said fifth list to said second calculation means (12) which is suitable for eliminating identities that appear in said fifth list from said first list of identities of braking devices (4) that ought to be in the activated state, and suitable for adding the same number of identities of braking devices (4) to said first list as the number of identities of braking devices (4) that has just been removed therefrom.

9. A system according to any preceding claim, and including a plurality of temperature sensors (9) each associated with a respective brake (3), the system being characterized in that the computer (7) includes eighth calculation means (21) receiving data from said temperature sensors (9) and suitable for detecting when each of the brakes (3) is at a temperature below a rest temperature TR that determines a rest state during a thermal cycle of the brakes (3), and for transmitting a sixth signal representative of such detection to said second calculation means (12) which responds to receiving such a sixth signal by changing the order in which the identities of the braking devices (4) are entered into said first list.

10. A system according to claim 9, characterized in that said second calculation means (12) is suitable, on receiving said sixth signal, for modifying said order in which the identities of braking devices (4) are entered into said first list in such a manner that over a large number of thermal cycles, it ensures that each of said braking devices (4) is used first about as often as each of the others.

11. A system according to any preceding claim, characterized in that it includes display means (16) including a display (16a) and receiving the number D or F of braking devices (4) that ought to be in the activated state in the absence of skidding from said second calculation means (12) via a third link (16L), which number is a function of said first and fifth signals and also of the number Di or Fi of braking devices (4) actually in the activated state.

12. A system according to any preceding claim, and applied to an aircraft having landing gear including a plurality of pairs of wheels (2a, 2b), the wheels in each pair being disposed symmetrically relative to each other about the plane of symmetry of the aircraft, the system being characterized in that said second calculation means (12) maintains both braking devices (4a, 4b) of the two wheels (2a, 2b) of each pair in an identical state, activated or not activated.

13. A system according to claim 1, controlling the brakes of a first vehicle (PV) which is coupled to at least one second vehicle (DV) having a plurality of wheels provided with carbon disk brakes (3) controlled by respective braking devices (4), the system being characterized in that said second vehicle (DV) includes a computer (7A) controlling the braking devices (4) of said second vehicle (DV) and comprising:
ninth calculation means similar to said first calculation means (11) connected to said first link (6L) to receive said first signal and to respond thereto by supplying an eighth signal representative of a minimum number DA of braking devices (4) of the second vehicle (DV) that ought to be in the activated state to obtain the desired deceleration; and
tenth calculation means similar to said second calculation means (12) and responsive to said eighth signal to draw up a sixth list including DA identities of braking devices (4) of the second vehicle (DV) that ought to be in the activated state, said computer (7A) of the second vehicle (DV) using said sixth list for activating said DA braking devices (4) of the second vehicle (DV).

14. A system according to claim 13, in which each of the wheels (2) of the first and second vehicles (PV, DV) is provided with a respective skid detector (8), and in which the computer (7) of said first vehicle (PV) includes:
third calculation means (13) connected to each of the outputs of the plurality of said skid detectors (8) relating to the wheels (2) of the first vehicle (PV) and suitable for calculating the number of skids of each wheel of said first vehicle (PV) during a determined duration; and
fourth calculation means (14) receiving said skid numbers and suitable for detecting the existence of at least N wheels, each presenting at least M skids, where N and M are integers not less than 1, and providing a third signal representative of the existence of such skids to said second calculation means (12), said second calculation means (12) then increasing said number D of braking devices (4) that ought to be in the activated state to raise it to a higher number, the size of said increase depending on the pair of values M and N;
the system being characterized in that said computer (7A) of said second vehicle (DV) comprises:
eleventh calculation means identical to said third calculation means (13) and connected to each of the outputs of the plurality of said skid detectors (8) relating to the wheels (2) of the second vehicle (DV) and suitable for calculating the number of skids of each wheel (2) of said second vehicle (DV) during said determined duration; and
twelfth calculation means identical to said fourth calculation means (14) and receiving said numbers of skids relating to the wheels (2) of the second vehicle (DV), and suitable for detecting the existence of at least N wheels each having at least M skids, and supplying said tenth calculation means of the computer (7A) of the second vehicle (DV) with a ninth signal representative of the existence of such skids of the wheels (2) of the second vehicle (DV), said tenth calculation means then increasing said number DA of braking devices (4) of the second vehicle (DV) that ought to be in the activated state to raise it to a higher number DiA, the size of said increase depending on the pair of values M and N.

15. A system according to claim 14, in which the computer (7) of said first vehicle (PV) includes fourth calculation means (14) suitable for detecting the simultaneous existence both of at least N1 wheels each presenting at least M1 skids, where N1 and M1 are integers not less than 1, and also of at least N2 wheels each presenting M2 skids, where N2 and M2 are integers not less than 1, and supplying a fourth signal representative of the existence of such skids to said second calculation means (12), said second calculation means (12) then increasing said number D of braking devices (4) that ought to be in the activated state to raise it to a number D2j that is at least two units greater than D, the size of said increase depending on the pairs of values M1, N1 and M2, N2;
the system being characterized in that the computer (7A) of the second vehicle (DV) includes twelfth calculation means similar to the fourth calculation means (14) and suitable for detecting the simultaneous existence both of at least N1 wheels each presenting at least M1 skids, where N1 and M1 are integers not less than 1, and also of at least N2 wheels each presenting M2 skids, where N2 and M2 are integers not less than 1, and supplying a tenth signal representative of the existence of such skids to said tenth calculation means, said tenth calculation means then increasing said number DA of braking devices (4) that ought to be in the activated state to raise it to a number D2jA which is at least two units greater than DA, the size of said increase depending on the pairs of values M1, N1 and M2, N2.

16. A system according to claim 13 or 15, including first data input means (15) having an adjustably controllable input (15a) suitable for actuation by the driver to input data relating to the estimated value of the coefficient of friction of the wheels (2) on the ground, and which transforms said data into a fifth signal representative of said estimated value of the coefficient of friction, said fifth signal being transmitted by a second link (15L) to said second calculation means (12) of the computer (7) of the first vehicle (PV) which modifies the number of identities of braking devices (4) of said first list of the first vehicle (PV) as a function of said fifth signal;
the system being characterized in that said second link (15L) is connected to the tenth calculation means which modifies the number DA of identities of braking devices (4) of said sixth list as a function of said fifth signal.

17. A system according to any one of claims 13 to 16, in which each of the wheels (2) of the first and second vehicles (PV, DV) is provided with a temperature sensor (9) and in which the computer (7) of said first vehicle (PV) includes fifth calculation means (18) receiving the data from said temperature sensors (9) of the wheels (2) of the first vehicle (PV) and suitable for drawing up a third list of identities of braking devices (4) of the first vehicle (PV) in which the brake (3) is at a temperature lying between a pre-established minimum temperature Tmin and a pre-established maximum temperature Tmax, and for transmitting said third list to said second calculation means (12), which second calculation means gives priority to the identities of the braking devices (4) in said third list when drawing up said first list of the first vehicle (PV);
the system being characterized in that the computer (7A) of the second vehicle (DV) includes thirteenth calculation means similar to the fifth calculation means (18) receiving the data from said temperature sensors (9) of the wheels (2) of the second vehicle (DV) and suitable for establishing an eighth list including the identities of the braking devices (4) of the second vehicle (DV) whose brakes (3) are at temperatures lying between a pre-established minimum temperature Tmin and a pre-established maximum temperature Tmax, and for transmitting said eighth list to said tenth calculation means, said tenth calculation means giving priority to the identities of braking devices (4) in said eighth list when drawing up said sixth list.

18. A system according to any one of claims 13 to 17, including display means (16) comprising a display (16a) receiving both the number D of braking devices (4) that ought to be in the activated state in the absence of skidding of the wheels (2) of the first vehicle (PV) from said second calculation means (12) of the computer (7) of the first vehicle (PV) via a third link (16L), which number is a function of said first and fifth signals, and also receiving the number Di or Fi of braking devices (4) actually in the activated state;
the system being characterized in that:
said third link (16L) is connected to the tenth calculation means; and
said display means (16) is suitable for displaying both the number DA or FA of braking devices (4) of said second vehicle (DV) that ought to be in the activated state in the absence of skidding of the wheels (2) of the second vehicle (DV), and also the number DiA or FiA of braking devices (4) actually activated in said second vehicle (DV).

19. A system according to any one of claims 13 to 18, characterized in that it includes:
remote control means (30) suitable for receiving and using telemetry data and for emitting remote control commands; and
a two-way bus (31) connected to said remote control means (30) and to said computer (7, 7A) of each vehicle (PV, DV), each of said computers (7, 7A) being suitable for emitting telemetry data over said bus (31) and for receiving and using remote control commands thereover.

## Patentansprüche

1. System zur Steuerung von Bremsvorrichtungen eines von einem Fahrzeugführer gesteuerten Fahrzeugs mit einer Vielzahl von Rädern (2) mit Kohlescheibenbremsen (3), die durch eine Bremsvorrichtung (4) gesteuert werden, wobei das System versehen ist mit:
- einem Einstellorgan (5) zur beabsichtigten Bremsbetätigung, das vom Fahrzeugführer betätigt werden kann;
- einem Wandler (6), der vom Einstellorgan (5) zur beabsichtigten Bremsbetätigung gesteuert wird und ein erstes Signal abgibt, das für die Einstellung dieses Einstellorgans (5) durch den Fahrzeugführer zur Verzögerung des Fahrzeugs repräsentativ ist;
- einem Rechner (7), der die Bremsvorrichtungen (4) steuert; und
- einer ersten Verbindung (6L) zur Verbindung von Wandler (6) mit Rechner (7) zur Übertragung des ersten Signals;
dadurch gekennzeichnet, daß der Rechner (7) umfaßt:
- ein erstes mit der ersten Verbindung (6L) verbundenes Rechenmittel (11), an das das erste Signal gelangt und das als Reaktion ein zweites, für die Mindestanzahl D von Bremsvorrichtungen (4), die zur gewünschten Verzögerung aktiviert sein müssen, repräsentatives Signal abgibt; und
- ein zweites Rechenmittel (12), das aus dem zweiten Signal eine erste Liste von D Identitäten von Bremsvorrichtungen (4) aufstellt, die aktiviert sein müssen, wobei der Rechner (7) die erste Liste zur Aktivierung der D Bremsvorrichtungen nutzt.

2. System nach Anspruch 1 für ein Fahrzeug, das an jedem Rad einen Schlupfdetektor (8) der Räder (2) am Boden hat,
dadurch gekennzeichnet, daß der Rechner (7) umfaßt:
- ein drittes Rechenmittel (13), das mit jedem der Ausgänge der Vielzahl der Schlupfdetektoren (8) verbunden ist, mit dem die Schlupfzahl jedes Rades (2) während einer bestimmten Dauer berechnet werden kann; und
- ein viertes Rechenmittel (14), an das die Schlupfzahl gelangt, das das Vorhandensein von mindestens N Rädern (N ganze Zahl größer oder gleich 1) mit jeweils mindestens M Schlupfen (M ganze Zahl größer oder gleich 1) nachweisen kann und das ein drittes, für ein solches Vorhandensein von Schlupfen signifikantes Signal an das zweite Rechenmittel (12) abgibt, wobei dieses zweite Rechenmittel (12) dann die Anzahl D der aktiviert sein müssenden Bremsvorrichtungen (4) auf eine größere Anzahl Di erhöht und diese Erhöhung von den Werten des Paares M - N abhängig ist.

3. System nach Anspruch 2,
dadurch gekennzeichnet, daß das vierte Rechenmittel (14) das gleichzeitige Vorhandensein von mindestens N1 Rädern (N 1 ganze Zahl großer oder gleich 1) mit jeweils M1 Schlupfen (M1 ganze Zahl größer oder gleich 1) sowie von mindestens N2 Rädern (N2 ganze Zahl größer oder gleich 1) mit jeweils M2 Schlupfen (M2 ganze Zahl größer oder gleich 1) nachweisen kann und ein viertes, für ein solches Vorhandensein von Schlupfen signifikantes Signal an das zweite Rechenmittel (12) abgibt, wobei dieses zweite Rechenmittel (12) dann die Anzahl D der aktiviert sein müssenden Bremsvorrichtungen (4) auf eine Anzahl D2j, die um mindestens 2 Einheiten größer als D ist, erhöht und diese Erhöhung von den Werten der Paare M1, N1 und M2, N2 abhängig ist.

4. System nach einem der obigen Ansprüche,
dadurch gekennzeichnet, daß es ein erstes Datenanzeigemittel (15) mit einem einstellbaren Bedieneingang (15a) umfaßt, der vom Fahrzeugführer zur Eingabe der Daten für den Schätzwert des Reibbeiwerts der Räder (2) am Boden betätigt werden kann und der die Daten in ein fünftes, für den Schätzwert des Reibbeiwertes repräsentatives Signal umwandeln kann, wobei das fünfte Signal durch eine zweite Verbindung (15L) an das zweite Rechenmittel (12) übertragen wird, das in Abhängigkeit vom fünften Signal die Anzahl D oder Di der Identitäten der Bremsvorrichtungen (4) der ersten Liste in eine Anzahl F oder Fi (ganze positive Zahl) ändert.

5. System nach einem der obigen Ansprüche,
dadurch gekennzeichnet, daß der Rechner (7) eine Tabelle (17) hat, die an das zweite Rechenmittel (12) eine zweite geordnete Liste der Identitäten der Bremsvorrichtungen (4) gibt, wobei das zweite Rechenmittel (12) die Identitäten der Bremsvorrichtungen (4) der ersten Liste an einer vorbestimmten Stelle der zweiten Liste auswählt, wobei diese immer in der gleichen Richtung durchlaufen wird.

6. System nach einem der obigen Ansprüche mit einer Vielzahl von Temperaturgebern (9), die jeweils einer Bremse (3) zugeordnet sind,
dadurch gekennzeichnet, daß der Rechner (7) ein fünftes Rechenmittel (18) hat, an das die Informationen der Temperaturgeber (9) gelangen und das eine dritte Liste der Identitäten der Bremsvorrichtungen (4) aufstellen kann, deren Bremse (3) eine Temperatur hat, deren Wert zwischen einem vorbestimmten kleinsten (Tmin) und größten (Tmax) Temperaturwert liegt, und das die dritte Liste an das zweite Rechenmittel (12) überträgt, wobei dieses in dieser dritten Liste vorrangig die Identitäten der Bremsvorrichtungen (4) auswählt, die die erste Liste bilden.

7. System nach einem der Ansprüche 1 bis 5 mit einer Vielzahl von Temperaturgebern (9), die jeweils einer Bremse (3) zugeordnet sind,
dadurch gekennzeichnet, daß der Rechner (7) ein sechstes Rechenmittel (19) hat, an das die Informationen der Temperaturgeber (9) gelangen und das eine vierte geordnete Liste der Identitäten der Bremsvorrichtungen (4) aufstellen kann, deren Bremse (3) eine Temperatur hat, deren Wert zwischen dem vorbestimmten kleinsten (Tmin) und größten (Tmax) Temperaturwert liegt, wobei die vierte Liste in Abhängigkeit von der Temperaturabweichung zwischen der Temperatur jeder betrachteten Bremse und der kleinsten Temperatur (Tmin) geordnet wird, das sechste Rechenmittel (19) mit dem zweiten Rechenmittel (12) verbunden ist und an dieses die vierte Liste abgibt und das zweite Rechenmittel (12) vorrangig in dieser vierten Liste die Identitäten der Bremsvorrichtungen (4) der ersten Liste auswählt.

8. System nach einem der obigen Ansprüche und mit einer Vielzahl von Temperaturgebern (9), die jeweils einer Bremse (3) zugeordnet sind,
dadurch gekennzeichnet, daß der Rechner (7) ein siebentes Rechenmittel (20) hat, an das die Informationen der Temperaturgeber (9) gelangen, eine fünfte Liste der Identitäten der Bremsvorrichtungen (4) aufstellen kann, deren Bremse (3) eine Temperatur über einer vorbestimmten maximalen Sicherheitstemperatur (TM) hat, und die fünfte Liste an das zweite Rechenmittel (12) überträgt, das aus der ersten Liste der Identitäten der aktiviert sein müssenden Bremsvorrichtungen (4) die Identitäten der Bremsvorrichtungen (4) der fünften Liste beseitigen kann und in der ersten Liste eine Identitätenanzahl von Bremsvorrichtungen (4) einsetzen kann, die gleich der Identitätenanzahl der Bremsvorrichtungen (4) ist, die aus der ersten Liste beseitigt wurden.

9. System nach einem der obigen Ansprüche mit einer Vielzahl von Temperaturgebern (9), die jeweils einer Bremse (3) zugeordnet sind,
dadurch gekennzeichnet, daß der Rechner (7) ein achtes Rechenmittel (21) hat, an das die Informationen der Temperaturgeber (9) gelangen, das nachweisen kann, daß jede der Bremsen (3) eine Temperatur kleiner als die Ruhetemperatur (TR) hat, den Ruhezustand in einem Wärmezyklus der Bremsen (3) bestimmt und ein sechstes, für einen solchen Nachweis signifikantes Signal an das zweite Rechenmittel (12) überträgt, das nach Erhalt eines solchen sechsten Signals die Reihenfolge für die Aufstellung der Identitäten der Bremsvorrichtungen (4) der ersten Liste ändert.

10. System nach Anspruch 9,
dadurch gekennzeichnet, daß das zweite Rechenmittel (12) nach Erhalt des sechsten Signals die Reihenfolge für die Aufstellung der Identitäten der Bremsvorrichtungen (4) der ersten Liste so ändern kann, daß jede der Bremsvorrichtungen (4) bezogen auf eine große Anzahl von Wärmezyklen etwa ebenso oft als erste wie die anderen eingesetzt wird.

11. System nach einem der obigen Ansprüche,
dadurch gekennzeichnet, daß es ein zweites Anzeigemittel (16) mit einer Anzeigevorrichtung (16a) hat, an das vom zweiten Rechenmittel (12) über eine dritte Verbindung (16L) die Anzahl D oder der Bremsvorrichtungen (4), die bei Schlupffreiheit entsprechend dem ersten und fünften Signal aktiviert sein müssen, sowie die Anzahl Di oder Fi der tatsächlich aktivierten Bremsvorrichtungen (4) gelangen.

12. System nach einem der obigen Ansprüche, angewendet auf ein Luftfahrzeug mit einem Fahrwerk mit mehreren paarigen Radpaaren (2a,2b), die jeweils symmetrisch zum anderen Paar bezogen auf die Symmetrieebene des Luftfahrzeugs angeordnet sind,
dadurch gekennzeichnet, daß das zweite Rechenmittel (12) die beiden Bremsvorrichtungen (4a,4b) der paarigen Räder (2a,2b) eines Paares in einem identischen aktivierten oder inaktivierten Zustand hält.

13. System nach Anspruch 1 zur Kontrolle der Bremsen eines ersten Fahrzeugs (PV), an das mindestens ein zweites Fahrzeug (DV) mit einer Vielzahl von Rädern (2) mit Kohlescheibenbremsen (3) angekoppelt ist, die durch eine Bremsvorrichtung (4) gesteuert werden, dadurch gekennzeichnet, daß das zweite Fahrzeug (DV) einen Rechner (7A) zur Kontrolle der Bremsvorrichtungen (4) des zweiten Fahrzeugs (DV) hat, der umfaßt:
- ein neuntes Rechenmittel ähnlich dem ersten Rechenmittel (11), das mit der ersten Verbindung (6L) verbunden ist, über die es das erste Signal erhält und als Reaktion ein achtes Signal abgibt, das für die kleinste Anzahl DA von Bremsvorrichtungen (4) des zweiten Fahrzeugs (DV), die zum Erhalt der gewünschten Verzögerung aktiviert sein müssen, repräsentativ ist; und
- ein zehntes Rechenmittel ähnlich dem zweiten Rechenmittel (12), das aus dem achten Signal eine sechste Liste mit DA Identitäten von Bremsvorrichtungen (4) des zweiten Fahrzeugs (DV) aufstellt, die aktiviert sein müssen, wobei der Rechner (7A) des zweiten Fahrzeugs (DV) die sechste Liste zur Aktivierung der DA Bremsvorrichtungen (4) des zweiten Fahrzeugs (DV) benutzt.

14. System nach Anspruch 13, bei dem die Räder (2) des ersten (PV) und des zweiten (DV) Fahrzeugs jeweils mit einem Schlupfdetektor (8) versehen sind und bei dem der Rechner (7) des ersten Fahrzeugs (PV) umfaßt:
- ein drittes Rechenmittel (13), das mit jedem der Ausgänge der Vielzahl der Schlupfdetektoren (8) der Räder (2) des ersten Fahrzeugs (PV) verbunden ist und die Schlupfzahl jedes Rades (2) des ersten Fahrzeugs (PV) während einer bestimmten Dauer berechnen kann; und
- ein viertes Rechenmittel (14), an das die Schlupfzahlen gelangen, das das Vorhandensein von mindestens N Rädern (N ganze Zahl größer oder gleich 1) mit jeweils mindestens M Schlupfen (M ganze Zahl größer oder gleich 1) nachweisen kann und ein drittes, für diese Schlupfe signifikantes Signal an das zweite Rechenmittel (12) abgeben kann, wobei dieses zweite Rechenmittel (12) dann die Anzahl D der aktiviert sein müssenden Bremsvorrichtungen (4) auf eine größere Zahl erhöht, wobei die Erhöhung von den Werten des Paares M - N abhängig ist,
dadurch gekennzeichnet, daß der Rechner (7A) des zweiten Fahrzeugs (DV) umfaßt:
- ein elftes mit dem dritten Rechenmittel (13) identisches Rechenmittel, das mit jedem der Ausgänge der Vielzahl der Schlupfdetektoren (8) der Räder (2) des zweiten Fahrzeugs (DV) verbunden ist und die Schlupfzahl jedes Rades (2) des zweiten Fahrzeugs (DV) während einer bestimmten Dauer berechnen kann; und
- ein zwölftes mit dem vierten Rechenmittel (14) identisches Rechenmittel, an das die Schlupfzahlen der Räder (2) des zweiten Fahrzeugs (DV) gelangen, das das Vorhandensein von mindestens N Rädern mit jeweils mindestens M Schlupfen nachweisen und ein neuntes Signal von Rechner (7A) des zweiten Fahrzeugs (DV), das für ein solches Vorhandensein von Schlupfen an den Rädern (2) des zweiten Fahrzeugs (DV) signifikant ist, an das zehnte Rechenmittel abgibt, wobei dieses zehnte Rechenmittel dann die Anzahl DA der aktiviert sein müssenden Bremsvorrichtungen (4) des zweiten Fahrzeugs (DV) auf eine größere Zahl DiA erhöht, wobei die Erhöhung von den Werten des Paares M - N abhängig ist.

15. System nach Anspruch 14, bei dem der Rechner (7) des ersten Fahrzeugs (PV) ein viertes Rechenmittel (14) zum Nachweis des gleichzeitigen Vorhandenseins von mindestens N1 Rädern (N1 ganze Zahl größer oder gleich 1) mit jeweils mindestens M1 Schlupfen (M1 ganze Zahl größer oder gleich 1) sowie von mindestens N2 Rädern (N2 ganze Zahl größer oder gleich 1) mit jeweils M2 Schlupfen (M2 ganze Zahl größer oder gleich 1) umfaßt, das ein viertes, für ein derartiges Vorhandensein von Schlupfen signifikantes Signal an das zweite Rechenmittel (12) gibt, wobei dieses zweite Rechenmittel (12) dann die Anzahl D der aktiviert sein müssenden Bremsvorrichtungen (4) auf eine Zahl D2j erhöht, die um mindestens zwei Einheiten größer als D ist, und diese Erhöhung von den Werten der Paare M1, N1 und M2, N2 abhängig ist,
dadurch gekennzeichnet, daß der Rechner (7A) des zweiten Fahrzeugs (DV) ein zwölftes Rechenmittel ähnlich dem vierten Rechenmittel (14) zum Nachweis des gleichzeitigen Vorhandenseins von mindestens N1 Rädern (N1 ganze Zahl größer oder gleich 1) mit jeweils mindestens M1 Schlupfen (M1 ganze Zahl größer oder gleich 1) sowie von mindestens N2 Rädern (N2 ganze Zahl größer oder gleich 1) mit jeweils M2 Schlupfen (M2 ganze Zahl größer oder gleich 1) hat, das ein zehntes, für ein solches Vorhandensein von Schlupfen signifikantes Signal an das zehnte Rechenmittel abgibt, wobei dieses zehnte Rechenmittel dann die Anzahl DA der aktiviert sein müssenden Bremsvorrichtungen (4) auf eine Zahl D2jA erhöht, die mindestens um zwei Einheiten größer als DA ist, und diese Erhöhung von den Werten der Paare M1, N1 und M2, N2 abhängig ist.

16. System nach einem der Ansprüche 13 oder 15 mit einem ersten Datenanzeigemittel (15) mit einem einstellbaren Bedieneingang (15a), der vom Fahrzeugführer zur Eingabe der Daten für den Schätzwert des Reibbeiwerts der Räder (2) am Boden betätigt werden kann und der die Daten in ein fünftes Signal umwandelt, das für den Schätzwert des Reibbeiwerts repräsentativ ist, wobei das fünfte Signal über eine zweite Verbindung (15L) an das zweite Rechenmittel (12) von Rechner (7) des ersten Fahrzeugs (PV) übertragen wird, der in Abhängigkeit vom fünften Signal die Identitätenanzahl der Bremsvorrichtungen (4) der ersten Liste des ersten Fahrzeugs (PV) ändert,
dadurch gekennzeichnet, daß die zweite Verbindung (15L) an das zehnte Rechenmittel angeschlossen ist, die in Abhängigkeit vom fünften Signal die Identitätenanzahl DA der Bremsvorrichtungen (4) der sechsten Liste ändert.

17. System nach einem der Ansprüche 13 bis 16, bei dem die Räder (2) des ersten (PV) und des zweiten (DV) Fahrzeugs jeweils mit einem Temperaturgeber (9) versehen sind und der Rechner (7) des ersten Fahrzeugs (PV) ein fünftes Rechenmittel (18) hat, an das die Informationen der Temperaturgeber (9) der Räder (2) des ersten Fahrzeugs (PV) gelangen, das eine dritte Liste der Identitäten der Bremsvorrichtungen (4) des ersten Fahrzeugs (PV) aufstellen kann, deren Bremse (3) eine Temperatur hat, deren Wert zwischen einem vorbestimmten kleinsten (Tmin) und größten (Tmax) Temperaturwert liegt, und das die dritte Liste an das zweite Rechenmittel (12) überträgt, wobei dieses in dieser dritten Liste vorrangig die Identitäten der Bremsvorrichtungen (4) der ersten Liste des ersten Fahrzeugs (PV) auswählt, dadurch gekennzeichnet, daß der Rechner (7A) des zweiten Fahrzeugs (DV) ein dreizehntes Rechenmittel ähnlich dem fünften Rechenmittel (18) hat, an das die Informationen der Temperaturgeber (9) der Räder (2) des zweiten Fahrzeugs (DV) gelangen, das eine achte Liste mit den Identitäten der Bremsvorrichtungen (4) des zweiten Fahrzeugs (DV) aufstellen kann, deren Bremse (3) eine Temperatur hat, deren Wert zwischen einem vorbestimmten kleinsten (Tmin) und größten (Tmax) Temperaturwert liegt, und die achte Liste an das zehnte Rechenmittel überträgt, wobei dieses zehnte Rechenmittel in dieser achten Liste vorrangig die Identitäten der Bremsvorrichtungen (4) der sechsten Liste auswählt.

18. System nach einem der Ansprüche 13 bis 17 mit einem zweiten Anzeigemittel (16) mit einer Anzeigevorrichtung (16a), an das vom zweiten Rechenmittel (12) von Rechner (7) des ersten Fahrzeugs (PV) über eine dritte Verbindung (16L) die Anzahl D der Bremsvorrichtungen (4), die bei Schlupffreiheit der Räder (2) des ersten Fahrzeugs (PV) entsprechend dem ersten und fünften Signal aktiviert sein müssen, sowie die Anzahl Di oder Fi der tatsächlich aktivierten Bremsvorrichtungen (4) gelangen,
dadurch gekennzeichnet, daß:
- die dritte Verbindung (16L) an das zehnte Rechenmittel angeschlossen ist, und dadurch, daß
- das zweite Anzeigemittel (16) die Anzahl DA oder FA der Bremsvorrichtungen (4) des zweiten Fahrzeugs (DV), die bei Schlupffreiheit der Räder (2) des zweiten Fahrzeugs (DV) aktiviert sein müssen, sowie die Anzahl DiA oder FiA der tatsächlich aktivierten Bremsvorrichtungen (4) des zweiten Fahrzeugs (DV) anzeigen kann.

19. System nach einem der Ansprüche 13 bis 18,
dadurch gekennzeichnet, daß es umfaßt:
- ein Fernbedienungsmittel (30), das Fernmeßdaten empfangen und nutzen und Fernbedienungsbefehle abgeben kann; und
- einen bidirektionalen Bus (31), der mit dem Fernbedienungsmittel (30) und dem Rechner (7,7A) jedes Fahrzeugs (PV,DV) verbunden ist, wobei dieser Rechner (7,7A) über den Bus (31) Fernmeßdaten abgeben und Fernbedienungsbefehle empfangen und nutzen kann.
